# EUROPEAN PATENT APPLICATION

(11) **EP 3 920 646 A1**
(43) Date of publication of application: **08.12.2021**
(21) Application number: 20748795.0
(22) Date of filing: 28.01.2020
(51) Int. Cl.: H04W 74/08, H04W 74/00, H04W 4/06, H04W 4/46, H04W 84/12

(54) **MULTIUSER COMMUNICATION METHOD AND DEVICE IN DISTRIBUTED WIRELESS LAN**

(30) Priority: 28.01.2019 KR 20190010244; 07.02.2019 KR 20190014217; 11.02.2019 KR 20190015308; 18.11.2019 KR 20190148075
(71) Applicant: HYUNDAI MOTOR COMPANY, Seoul 06797 (KR); Kia Corporation, Seocho-gu Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 21562 (KR)
(74) Representative: Hoffmann Eitle
(86) International application number: PCT/KR2020/001297
(87) International publication number: WO 2020/159197

(57) **Abstract**

An operation method of a first communication node in a wireless communication network includes steps of: transmitting, to a plurality of communication nodes, a first frame having configuration information of a data transmission interval including at least one frame transmission interval; and receiving second data frames from at least one of the communication nodes, among the plurality of communication nodes, during the data transmission interval. The first frame may include: identifiers indicating the plurality of communication nodes; and information for configuring a network allocation vector (NAV) for communication nodes excluding the plurality of communication nodes.

## Description

### BACKGROUND

### (a) Technical Field

The present disclosure relates to a data frame transmission method in a wireless LAN, more particularly, to a communication method for supporting transmission and reception of data frames of multiple users in a distributed wireless LAN structure.

### (b) Description of the Related Art

Recently, with the spread of mobile devices, wireless local area network (wireless LAN) technology, which provides fast wireless Internet service, has been in the spotlight. The WLAN technology enables mobile devices such as smart phones, smart pads, laptop computers, portable multimedia players, embedded devices, and the like to wirelessly connect to the Internet based on wireless communication technology at a short range.

Early WLAN technology used a frequency band of about 2.4 GHz in accordance with an Institute of Electrical and Electronics Engineers (IEEE) 802.11 standard to support a data transmission rate of about 1 Mbps to about 2 Mbps based on frequency hopping, spread spectrum, infrared communication, and the like. Recently, an orthogonal frequency division multiplex (OFDM) scheme was applied to support a data transmission rate of up to about 54 Mbps. In addition, the IEEE 802.11 is realizing or developing standards for various technologies such as Quality of Service (QoS) enhancement, access point (AP) protocol compatibility, security enhancement, radio resource measurement, wireless access vehicular environment (WAVE), fast roaming, mesh network, interworking with external networks, and wireless network management.

Among the various IEEE 802.11 standards, the IEEE 802.11b supports a data transmission rate of up to about 11Mbps using the 2.4 GHz frequency band. The IEEE 802.11a, commercialized after the IEEE 802.11b, reduced impact of interferences compared to the congested 2.4 GHz frequency band by using a frequency band of about 5 GHz instead of the 2.4 GHz frequency band, and improved the data transmission rate to the maximum of about 54Mbps using the OFDM technology. However, the IEEE 802.11a has a shorter communication range than the IEEE 802.11b. Additionally, the IEEE 802.11g, like the IEEE 802.11b, uses the 2.4 GHz frequency band to realize a data transmission rate of up to about 54 Mbps. Backward compatibility of the IEEE 802.11g has received considerable attention, and a communication range of the IEEE 802.11g is superior to the IEEE 802.11a.

In addition, the IEEE 802.1In is a technical standard established to overcome the limitation on the data transmission rate. The limitation on the data transmission rate is considered a weak point of the WLAN. The IEEE 802.11n increases speed and network reliability and extends the operating range of wireless networks. More specifically, the IEEE 802.1 In supports high throughput (HT) with a data transmission rate of up to about 540 Mbps and is based on Multiple Inputs and Multiple Outputs (MIMO) technology. The MIMO uses multiple antennas at both a transmitter side and a receiver side to minimize transmission errors and optimize data rates. Additionally, the IEEE 802.11n uses a coding scheme of transmitting multiple duplicate copies to increase data reliability, and may also use the OFDM to increase a transmission speed.

As the use of WLAN spreads and WLAN applications are diversified, WLAN systems have been developed to support relatively high throughput (VHT) compared to the data throughput supported by the IEEE 802.11n. Among them, the IEEE 802.11ac supports a wide bandwidth (about 80 MHz to about 160 MHz) at a frequency band of about 5 GHz. The IEEE 802.11ac standard is defined only in the 5 GHz frequency band, but for backward compatibility with products supporting the existing 2.4 GHz frequency band, early IEEE 802.11ac chipsets also support operations in the 2.4 GHz frequency band. Particularly, the IEEE 802.11ac supports a bandwidth of up to about 40 MHz at the 2.4 GHz frequency band. Theoretically, based on the IEEE 802.11ac standard, a WLAN speed of multiple terminals may be at least about 1 Gbps, and a maximum single link speed may be at least about 500 Mbps. The WLAN speed and the maximum single link speed are accomplished by extending wireless interfaces adopted by the IEEE 802.1In, such as wider radio frequency bandwidth (up to about 160 MHz), more MIMO spatial streams (up to eight), multi-user MIMO, and higher density modulation (up to about 256 quadrature amplitude modulation (QAM)). In addition, the IEEE 802.11ad is a scheme of transmitting data using a frequency band of about 60 GHz instead of the existing 2.5 GHz and 5 GHz bands. IEEE 802.11ad is a transmission standard that provides a data transmission rate up to about 7 Gbps using beamforming technology, and the 802.11ad is suitable for a large amount of data or high bitrate video streaming such as uncompressed HD video. However, signals transmitted in the 60 GHz frequency band have difficulty in passing through obstacles, and thus may be used only between devices in a short range.

The WLAN may use a wide frequency band. To use the wide frequency band, a station checks whether there is an available band for a certain period of time before transmitting data, and uses the wide frequency band by concatenating an adjacent frequency band based on whether the adjacent frequency band is available. For example, when a 20 MHz band is a primary frequency band (main channel), a 20 MHz band (i.e., first adj acent band) adj acent to the primary frequency band is available, a 20 MHzband (i.e., second adjacent band) adjacent to the first adjacent band is unavailable, and a 20 MHz band (i.e., third adjacent channel) adjacent to the second adjacent band is available, data may be transmitted using a total of 40 MHz as a transmission band since the third adjacent channel is not contiguous with the main channel. In other words, since only the contiguous frequency bands are used as a data transmission band, an actual available frequency band is unable to be used. Additionally, the conventional radio access technology supports only one-to-one connection between one transmitting terminal and one receiving terminal for each transmission attempt within the same basic service set (BSS). Thus, the conventional radio access technology is inefficient since the conventional radio access technology does not operate based on differences in the connection environment or transmission data characteristics of the terminals.

The IEEE 802.11p is a technical standard developed for Intelligent Transport System (ITS) communications. The IEEE 802.11p uses the physical layer of the IEEE 802.11a, and the Media Access Control (MAC) layer of the IEEE 802.11p employs Enhanced Distributed Channel Access (EDCA) of the IEEE 802.11e. The channel bandwidth thereof is based on 10 MHz, and a 20 MHz channel is also available. The IEEE 802.11p supports 'outside context of BSS (OCB)' communication in which terminals can transmit and receive data without association with an access point.

The above-referenced technologies were described to enhance understanding of the background of the present disclosure. The above-referenced technologies may include information that does not quality as prior art with respect to the present application, and the above-referenced technologies are not necessarily known to those of ordinary skill in the art.

### SUMMARY

An objective of the present disclosure is to provide an operation method of a communication node for avoiding collisions of signals by performing an enhanced distributed coordination access (EDCA) operation in a transmission slot determined based on index information indicating each transmission slot.

An operation method of a first communication node in a wireless communication network, according to an exemplary embodiment of the present disclosure for achieving the objective, may include: transmitting a first frame to a plurality of communication nodes, the first frame including configuration information of a data transmission period including at least one frame transmission period; and receiving second data frames from one or more communication nodes among the plurality of communication nodes during the data transmission period, wherein the first frame includes identifiers indicating the plurality of communication nodes and information for setting network allocation vectors (NAVs) for communication nodes excluding the plurality of communication nodes.

The operation method may further comprise, before transmitting the first frame, transmitting, to the plurality of communication nodes, a trigger indication frame including information indicating that transmission of the first frame is scheduled.

An interval between the trigger indication frame and the first frame may be a short inter-frame space (SIFS) or a reduced inter-frame space (RIFS).

The trigger indication frame may include a transmission period of the first frame and identifiers indicating the plurality of communication node, and may further include information for setting NAVs for communication nodes excluding the plurality of communication nodes.

The first frame may further include information for requesting a reception response to the trigger indication frame, and each of the second data frames may include reception response information of each of the one or more communication nodes for the trigger indication frame.

The information for requesting the reception response to the trigger indication frame may request the reception response through a difference between a time indicated by a duration field of a media access control (MAC) header of the first frame and a time indicated by a physical protocol data unit (PPDU) length field of the MAC header.

The operation method may further include, after receiving the second data frames, retransmitting the trigger indication frame in a broadcast manner if the second data frames are not received from at least one of the one or more communication nodes.

The first frame may include at least one among information on a number of the at least one frame transmission period, information indicating the at least one frame transmission period, and information on an interval between the at least one frame transmission period.

An operation method of a first communication node in a wireless communication network, according to an exemplary embodiment of the present disclosure for achieving the objective, may include: transmitting a first frame to a plurality of communication nodes; transmitting a reception response request frame to the plurality of communication nodes, the reception response request frame including information requesting transmission of a reception response frame for the first frame and an identifier of each of one or more communication nodes that are to transmit the reception response frame among the plurality of communication nodes; and receiving the reception response frames from the one or more communication nodes.

The reception response request frame may include information on at least one frame transmission period in which the one or more communication nodes transmit the reception response frames, respectively, and the at least one frame transmission period may be arranged at a short inter-frame space (SIFS) interval.

The reception response request frame may indicate an order of receiving the reception response frames from the one or more communication nodes, and according to the order indicated by the reception response request frame, the reception response frames may be received from the one or more communication nodes.

The first frame may include identifiers indicating the plurality of communication nodes and information for setting network allocation vectors (NAVs) for communication nodes excluding the plurality of communication nodes.

The operation method may further include, before transmitting the first frame, transmitting a clear-to-send (CTS)-to-self frame to the plurality of communication nodes, wherein the CTS-to-self frame includes information on a period in which the first frame is transmitted and a period in which the reception response message is transmitted.

A transmission power of the CTS-to-self frame may be a maximum transmission power of the first communication node.

An operation method of a first communication node in a wireless communication network, according to an exemplary embodiment of the present disclosure for achieving the objective, may include: receiving a first frame from a second communication node; receiving, from the second communication node, a reception response request frame including information requesting transmission of a reception response frame for the first frame and an identifier of the second communication node; and transmitting the reception response frame for the first frame to the second communication node, wherein the first frame further includes an identifier of the first communication node.

The first frame may be a time trigger frame (TTF), and an interval between the TTF and the reception response request frame may be a short inter-frame space (SIFS) or a reduced inter-frame space (RIFS).

The reception response request frame may include information on at least one frame transmission period for transmitting the reception response frames, and an interval between the at least one frame transmission period may be a short inter-frame space (SIFS).

The reception response request frame may indicate a transmission order of the reception response frames through information mapping identifiers of one or more communication nodes with the at least one frame transmission period, and in the transmitting of the reception response frame, the reception response frame may be transmitted through a transmission period indicated by an identifier of the first communication node.

The operation method may further include, before receiving the first frame, receiving a clear-to-send (CTS)-to-self frame from the second communication node, wherein the CTS-to-self frame may include information on a period in which the first frame is transmitted and information on at least one frame transmission period for transmitting the reception response frame.

A transmission power of the CTS-to-self frame may be a maximum transmission power of the second communication node.

According to the present disclosure, a plurality of communication nodes performing 'outside context of BSS (OCB)' communication may transmit data frames by attempting channel access at the same time, thereby achieving an effect of delivering the data frames with low latency.

### BRIEF DESCRIPTION OF THE DRAWINGS

FIG. 1 is a diagram illustrating a first exemplary embodiment of a WLAN system.
FIG. 2 is a block diagram illustrating an exemplary embodiment of a communication node constituting a WLAN system.
FIG. 3 is a sequence chart illustrating an association procedure of a station in a WLAN system according to an exemplary embodiment.
FIG. 4 is a timing diagram illustrating a first exemplary embodiment of an operation method of a communication node based on an EDCA.
FIG. 5 is a diagram illustrating an exemplary embodiment of OCB communication performed between a plurality of communication nodes.
FIG. 6 is a sequence chart illustrating an exemplary embodiment of an operation of a plurality of communication nodes performing distributed OFDMA communication.
FIG. 7 is a diagram illustrating an exemplary embodiment of a distributed OFDMA communication operation initiated by a trigger frame.
FIG. 8 is a diagram illustrating an exemplary embodiment of a distributed OFDMA communication operation initiated by a data frame.
FIG. 9 is a diagram illustrating an exemplary embodiment of a distributed OFDMA communication operation and a retransmission operation initiated by a trigger frame.
FIG. 10 is a conceptual diagram illustrating an exemplary embodiment of a distributed OFDMA communication operation initiated by a trigger frame.
FIG. 11 is a diagram illustrating an exemplary embodiment of a distributed OFDMA communication operation initiated by a data frame.
FIG. 12 is a diagram illustrating an exemplary embodiment of a distributed OFDMA communication operation initiated by a data frame.
FIG. 13 is a diagram illustrating an exemplary embodiment of a TDMA communication operation initiated by a data frame.
FIG. 14 is a diagram illustrating a second exemplary embodiment of a TDMA communication operation initiated by a data frame.
FIG. 15 is a diagram illustrating a third exemplary embodiment of a TDMA communication operation initiated by a data frame.
FIG. 16 is a diagram illustrating an exemplary embodiment of a TDMA communication operation.
FIG. 17 is a diagram illustrating an exemplary embodiment of a normal driving vehicle and a platooning vehicle.
FIG. 18 is a diagram illustrating an exemplary embodiment of an operation of communication nodes for performing platooning communication.
FIG. 19 is a diagram illustrating a first exemplary embodiment of an operation of communication nodes for performing platooning group discovery.
FIG. 20 is a diagram illustrating a first exemplary embodiment of an operation of communication nodes for performing platooning group discovery.
FIG. 21 is a diagram illustrating a first exemplary embodiment of a procedure for joining a platooning group of communication nodes.
FIG. 22 is a diagram illustrating a second exemplary embodiment of a procedure for joining a platooning group of communication nodes.
FIG. 23 is a diagram illustrating an exemplary embodiment of an operation of communication nodes for performing platooning group join in an OFDMA communication scheme.
FIG. 24 is a diagram illustrating an exemplary embodiment of a procedure for transmitting and receiving periodic platooning information of a communication node.
FIG. 25 is a diagram illustrating a first exemplary embodiment of an operation of communication nodes for transmitting and receiving platooning information in an OFDMA communication scheme.
FIG. 26 is a diagram illustrating a second exemplary embodiment of an operation of communication nodes for transmitting and receiving platooning information in an OFDMA communication scheme.
FIG. 27 is a conceptual diagram illustrating an exemplary embodiment of a GCR operation of a communication node in a vehicle communication network.
FIG. 28 is a diagram illustrating an exemplary embodiment of an ACK reception operation of a communication node performing OCB communication.
FIG. 29 is a diagram illustrating an exemplary embodiment of a coverage of a clear-to-send (CTS)-to-self frame in a vehicle communication network.
FIG. 30 is a diagram illustrating an exemplary embodiment of an operation of communication nodes setting NAVs using a CTS-to-self frame.
FIG. 31 is a diagram illustrating an exemplary embodiment of a block ACK request frame.
FIG. 32 is a diagram illustrating an exemplary embodiment of a format of fields of a PLCP protocol data unit (PPDU) frame.
FIG. 33 is a diagram illustrating a first exemplary embodiment of an operation of communication nodes transmitting ACKs through a 20 MHz band.
FIG. 34 is a diagram illustrating a secondary exemplary embodiment of an operation of communication nodes transmitting ACKs through a 20 MHz band.
FIG. 35 is a diagram illustrating a third exemplary embodiment of an operation of communication nodes transmitting ACKs through a 20 MHz band.

### DETAILED DESCRIPTION

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

A communication system (e.g., a WLAN system) to which exemplary embodiments according to the present disclosure are applied will be described. The communication system to which the exemplary embodiments according to the present disclosure are applied is not limited to the contents described below, and the exemplary embodiments according to the present disclosure may be applied to various communication systems. The communication system may be used in the same sense as the communication network.

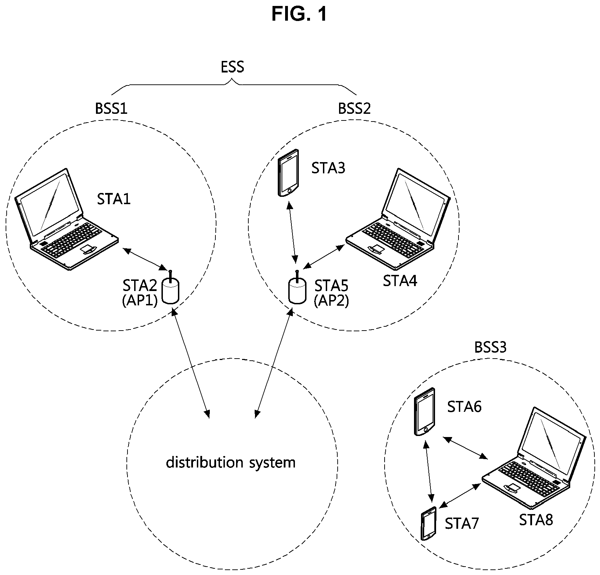

FIG. 1 is a diagram illustrating a first exemplary embodiment of a WLAN system.

As shown in FIG. 1, a WLAN system may include at least one basic service set (BSS). The BSS denotes a set of stations (STAs) (e.g., STA1, STA2 (i.e., AP1), STA3, STA4, and STA5 (i.e., AP2), STA6, STA7, and STA8) configured to communicate with each other through successful synchronization. The BSS does not necessarily denote a specific area. In exemplary embodiments below, a station that performs a function of an access point may be referred to as an "access point (AP)", and a station that does not perform the function of an access point may be referred to as a "non-AP station" or "station".

The BSSs may be classified as infrastructure BSSs and independent BSSs (IBSSs). In particular, a BSS1 and a BSS2 may be infrastructure BSSs, and a BSS3 may be an IBSS. The BSS1 may include the station STA1, the access point STA2 (i.e., API) that provides a distribution service, and a distribution system (DS) that connects the plurality of access points STA2 (i.e., API) and STA5 (i.e., AP2). In the BSS1, the access point STA2 (i.e., API) may manage the STA1.

The BSS2 may include the STA3 and the STA4, the access point STA5 (i.e., AP2) that provides the distribution service, and the distribution system that connects the plurality of access points STA2 (i.e., API) and STA5 (i.e., AP 2). In the BSS2, the access point STA5 (i.e., AP2) may manage the STA3 and the STA4.

The BSS3 may be an IBSS operating in an ad-hoc mode. In the BSS3, there is no AP that performs a management function at a center. In other words, in the BSS3, the stations STA6, STA7, and STA8 may be managed in a distributed manner. In the BSS3, all the stations STA6, STA7, and STA8 may be mobile stations and may be not permitted to connect to the DS, thus forming a self-contained network.

The access points STA2 (i.e., API) and STA5 (i.e., AP2) may provide access to the DS via a wireless medium for the stations STA1, STA3, and STA4 connected thereto. Communications between the stations STA1, STA3, and STA4 in the BSS 1 or the BSS2 may be generally performed via the access points STA2 (i.e., API) and STA5 (i.e., AP2), but when a direct link is established, direct communications between the stations STA1, STA3, and STA4 are also possible.

A plurality of infrastructure BSSs may be interconnected via a DS. A plurality of BSSs connected via a DS is referred to as an extended service set (ESS). The stations (e.g., STA1, STA2 (i.e., AP1), STA3, STA4, and STA5 (i.e., AP2)) included in an ESS may be configured to communicate with each other, and a station (e.g., STA1, STA3, or STA4) in the ESS may move from one BSS to another BSS while performing seamless communication.

The DS is a mechanism for one AP to communicate with another AP. The AP may be configured to transmit a frame for stations connected to a BSS managed by the AP or transmit a frame for an arbitrary station having moved to another BSS. Additionally, the AP may be configured to exchange frames with an external network, such as a wired network. The DS is not necessarily a network, and may have any form capable of providing a predetermined distribution service defined in the IEEE 802.11 standard. For example, the DS may be a wireless network, such as a mesh network, or a physical structure that connects APs with each other. Each of the communication nodes STA1, STA2 (i.e., AP1), STA3, STA4, STA5 (i.e., AP2), STA6, STA7, and STA8 included in the WLAN system may be configured as follows.

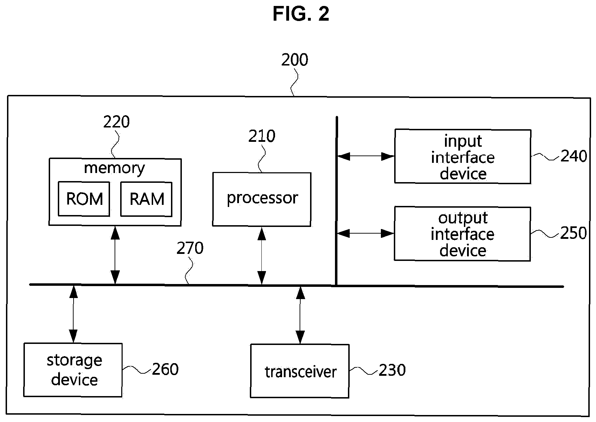

FIG. 2 is a block diagram illustrating an exemplary embodiment of a communication node configured as a WLAN system.

As shown in FIG. 2, a communication node 200 may include at least one processor 210, a memory 220, and a transceiver 230 connected to a network for performing communications. The transceiver 230 may also be referred to as a "radio frequency (RF) unit", "RF module", or the like. Additionally, the communication node 200 may further include an input interface device 240, an output interface device 250, a storage device 260, and the like. Each component included in the communication node 200 may be configured to communicate with each other as connected via a common bus 270.

However, each of the components included in the communication node 200 may be connected to the processor 210 via a separate interface or a separate bus rather than the common bus 270. For example, the processor 210 may be connected to at least one of the memory 220, the transceiver 230, the input interface device 240, the output interface device 250, and the storage device 260 via a dedicated interface.

The processor 210 may be configured to execute at least one instruction stored in at least one of the memory 220 and the storage device 260. The processor 210 may refer to a central processing unit (CPU), a graphics processing unit (GPU), or a dedicated processor. Methods in accordance with exemplary embodiments of the present disclosure may be performed by the processor 210. Each of the memory 220 and the storage device 260 may include at least one of a volatile storage medium and a non-volatile storage medium. For example, the memory 220 may include at least one of read-only memory (ROM) and random access memory (RAM).

Meanwhile, in the WLAN system, an association procedure may be performed as follows.

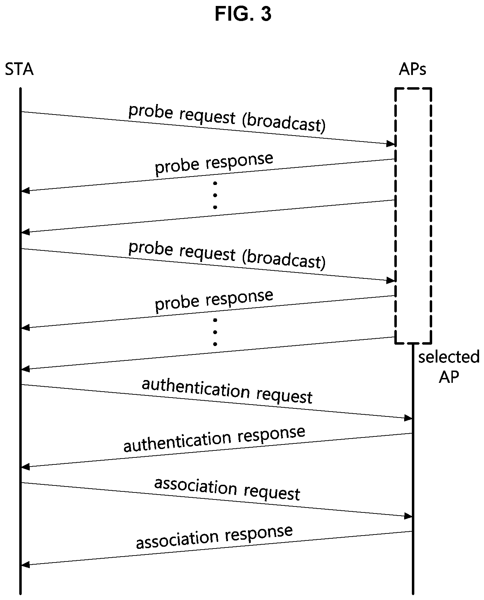

FIG. 3 is a sequence chart illustrating an association procedure of a station in a WLAN system.

As shown in FIG. 3, an association procedure of a station STA in an infrastructure BSS may generally be divided into a probe step of probing an AP, an authentication step for authentication with the probed AP, and an association step of associating with the authenticated AP.

The station STA may be configured to first probe neighboring APs with a probe process. The probe process may be performed in a passive scanning scheme or an active scanning scheme. The passive scanning scheme may be performed by overhearing beacons transmitted by the neighboring APs. Additionally, the active scanning scheme may be performed by broadcasting a probe request frame. The APs receiving the probe request frame may be configured to transmit probe response frames that correspond to the probe request frame to the station STA. The station STA may be configured to recognize the presence of the neighboring APs by receiving the probe response frames.

Subsequently, the station STA may be configured to perform an authentication with a probed AP, and perform an authentication with the plurality of probed APs. Authentication algorithms conforming to an IEEE 802.11 standard are classified as an open system algorithm for exchanging two authentication frames and a shared key algorithm for exchanging four authentication frames. The station STA may be configured to complete an authentication with an AP by exchanging an authentication request frame and an authentication response frame based on the authentication algorithms according to an IEEE 802.1 standard.

When authentication with the access point (AP) is completed, the station STA may be configured to perform an association step with the access point (AP). In particular, the station STA may be configured to select one access point AP among authenticated access points APs, and perform the association step with the selected access point AP. In other words, the station STA may be configured to transmit an association request frame to the selected AP and receive an association response frame that is a response to the association request frame from the selected AP, and thus, the association with the selected AP may be completed.

Meanwhile, a communication node (e.g., access point, station, etc.) belonging to the WLAN system may be configured to perform transmission and reception of a frame based on a point coordination function (PCF), a hybrid coordination function (HCF), an HCF controlled channel access (HCCA), a distributed coordination function (DCF), and/or an enhanced distributed channel access (EDCA).

The frame in the WLAN system may be classified into a management frame, a control frame, and a data frame. The management frame may be classified into an association request frame, an association response frame, a reassociation request frame, a reassociation response frame, a probe request frame, a probe response frame, a beacon frame, and an association. Additionally, the management frame may include a disassociation frame, an authentication frame, a deauthentication frame, an action frame, and the like.

The control frame may be classified into an acknowledgment (ACK) frame, a block ACK request (BAR) frame, a block ACK (BA) frame, a power saving (PS)-Poll frame, a request-to-send (RTS) frame, a clear-to-send (CTS) frame, and the like. The data frame may be classified into a quality of service (QoS) data frame and a non-QoS data frame. The QoS data frame may be configured to indicate a data frame for transmission based on the QoS, and the non-QoS data frame may be configured to indicate a data frame for transmission not based on the QoS.

Meanwhile, in the WLAN system, a communication node (e.g., access point or station) may be configured to operate based on the EDCA.

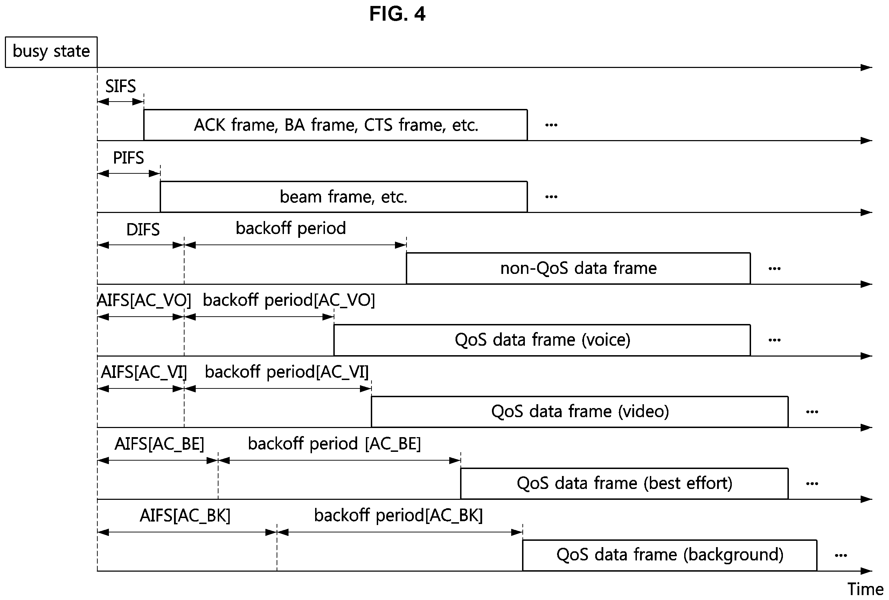

FIG. 4 is a timing diagram illustrating a first exemplary embodiment of an operation method of a communication node based on an EDCA.

As shown in FIG. 4, a communication node that wants to transmit a control frame (or a management frame) may be configured to perform a monitoring operation (e.g., carrier sensing operation) on a channel state during a predetermined period (e.g., a short interframe space (SIFS) or a PCF IFS (PIFS)). When the channel state is determined to be an idle state during the predetermined period (e.g., SIFS or PIFS), the communication node may be configured to transmit a control frame (or a management frame). For example, the communication node may be configured to transmit an ACK frame, a BA frame, a CTS frame, or the like when the channel state is determined to be an idle state during an SIFS. Additionally, the communication node (e.g., AP) may be configured to transmit a beacon frame or the like when the channel state is determined to be an idle state during a PIFS. When the channel state is determined to be busy during the predetermined period (e.g., SIFS or PIFS), the communication node may be configured to not transmit a control frame (or a management frame). In particular, the carrier sensing operation may be referred to as a "clear channel assessment (CCA) operation".

A communication node intending to transmit a non-QoS data frame may be configured to perform a monitoring operation (e.g., carrier sensing operation) on a channel state during a DCF IFS (DIFS). When the channel state is determined to be idle during a DIFS, the communication node may be configured to perform a random backoff procedure. For example, the communication node may be configured to select a backoff value (e.g., backoff counter) within a contention window based on the random backoff procedure, and perform the monitoring operation (e.g., carrier sensing operation) during a period that corresponds to the selected backoff value. The communication node may be configured to transmit a non-QoS data frame when the channel state is determined to be an idle state during the backoff period.

A communication node intending to transmit a QoS data frame may be configured to perform a monitoring operation (e.g., carrier sensing operation) on a channel state during an arbitration IFS (AIFS). When the channel state is determined to be idle during an AIFS, the communication node may be configured to perform a random backoff procedure. The AIFS may be set based on an access category (AC) of a data unit (e.g., a protocol data unit (PDU)) included in the QoS data frame. The AC of the data unit may be as shown in Table 1 below.

**[Table 1]**

| Priority | AC | Description |
|---|---|---|
| Lowest | AC_BK | Background |
| - | AC_BE | Best effort |
| + | AC_VI | Video |
| Highest | AC_VO | Voice |

As shown in Table 1, AC_BK may indicate background data, AC_BE may indicate data transmitted in a best effort manner, AC_VI may indicate video data, and AC_VO may indicate voice data. For example, the length of the AIFS for the QoS data frame of each of AC_VO and AC_VI may be set equal to the length of the DIFS. The length of the AIFS for the QoS data frame of AC_BE and AC_BK may be set longer than the length of the DIFS. The length of the AIFS for the QoS data frame of AC_BK may be set longer than the length of the AIFS for the QoS data frame of AC_BE.

In the random backoff procedure, the communication node may be configured to select a backoff value (e.g., backoff counter) within a contention window based on the AC of the QoS data frame. The contention window based on the AC may be as shown in Table 2 below. As shown below, CWₘᵢₙ may indicate the minimum value of the contention window, CWₘₐₓ may indicate the maximum value of the contention window, and each of the minimum and maximum values of the contention window may be expressed by the number of slots.

**[Table 2]**

| AC | CWₘᵢₙ | CWₘₐₓ |
|---|---|---|
| AC_BK | 31 | 1023 |
| AC_BE | 31 | 1023 |
| AC_VI | 15 | 31 |
| AC_VO | 7 | 15 |

The communication node may be configured to perform a monitoring operation (e.g., carrier sensing operation) on the channel state during a backoff period, and transmit the QoS data frame when the channel state is determined to be in an idle state during the backoff period.

Hereinafter, WLAN multi-channel operation methods in a communication system will be described. Even when a method (e.g., transmission or reception of a signal) to be performed at a first communication node among communication nodes is described, a corresponding second communication node may be configured to perform a method (e.g., reception or transmission of the signal) corresponding to the method performed at the first communication node. In other words, when an operation of a non-AP station is described, the corresponding AP may be configured to perform an operation that corresponds to the operation of the non-AP station. Conversely, when an operation of the AP is described, the corresponding non-AP station may be configured to perform an operation that corresponds to the operation of the AP.

In the following, a wireless communication network to which exemplary embodiments according to the present disclosure are applied will be described. The wireless communication network to which the exemplary embodiments according to the present disclosure are applied is not limited to the contents described below, and the exemplary embodiments according to the present disclosure may be applied to various wireless communication networks.

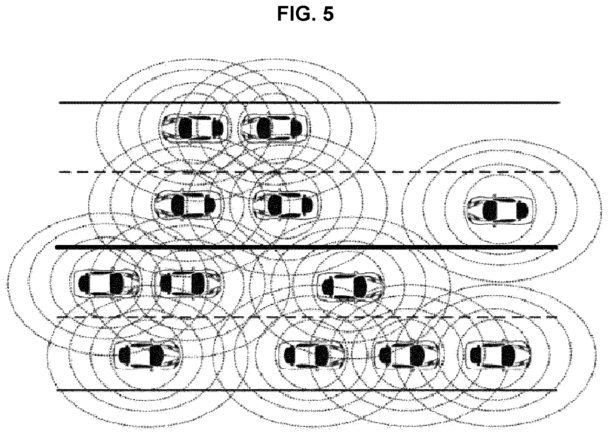

FIG. 5 is a diagram illustrating an exemplary embodiment of OCB communication performed between a plurality of communication nodes.

As shown in FIG. 5, a communication system may include a plurality of communication nodes, and each communication node may be a communication node configured identically to the STA shown in FIG. 1. For example, the communication nodes of FIG. 5 may be installed in on-board units (OBUs). A moving entity (e.g., OBU) equipped with the communication node (e.g., STA) of the present disclosure may transmit a data frame to a moving entity equipped with another communication node.

The respective communication nodes may communicate with each other only when included in the same service set (SS). In order to configure the SS, the communication nodes may need to perform a plurality of procedures including time and frequency synchronization, authentication and association, and the like. When the plurality of procedures are performed to configure the SS, it may not be possible to satisfy a latency-related condition required by some safety applications or the like.

Therefore, in order to satisfy requirements of vehicle-to-vehicle communication and to minimize a frame transmission/reception latency, the respective communication node may perform communication "outside context of BSS" (i.e., OCB communication). The OCB communication may be a communication protocol applied between two or more devices within a coverage of a single radio link.

The communication node performing OCB communication may configure an arbitrary SS or transmit and receive data and control frames at a time known to members. In addition, the communication node performing OCB communication may transmit a data frame including driving information such as its own speed and movement direction to other communication nodes periodically or when a specific condition is satisfied. The communication nodes communicating in the moving entities may transmit and receive data frames to and from each other as needed. The communication nodes performing OCB communication may perform communication without performing a network entry procedure including an association procedure that has to be performed in the conventional WLAN.

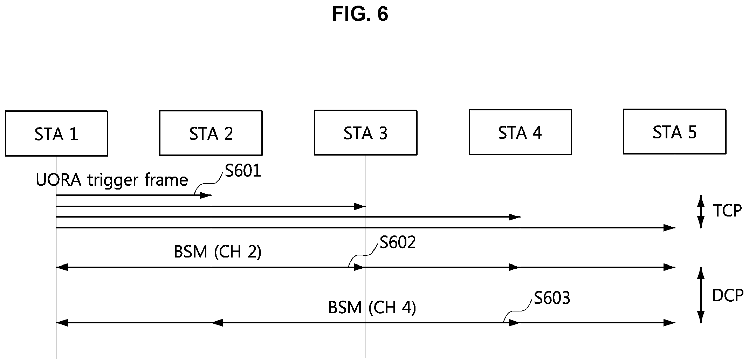

FIG. 6 is a sequence chart illustrating an exemplary embodiment of an operation of a plurality of communication nodes performing distributed OFDMA communication.

As shown in FIG. 6, a communication system may include a plurality of communication nodes, and each communication node may be a communication node configured identically to the STA shown in FIG. 5. For example, the communication nodes of FIG. 6 may be OBUs.

Referring to FIG. 6, a period in which the plurality of communication nodes perform communication may include a trigger frame contention period (TCP) that is a contention period for trigger frame transmission and a data frame contention period (DCP) that is a contention period for data frame transmission.

In a TCP, the plurality of communication nodes may perform contention for trigger frame transmission. As a result of the contention, one communication node (e.g., STA1) among the plurality of communication nodes may obtain a trigger frame transmission opportunity. The STA1 obtaining the trigger frame transmission opportunity may transmit a trigger frame to other communication nodes (i.e., STA2 to STA4). The trigger frame may be an uplink OFDMA random access (UORA) trigger frame. The trigger frame may include information on resources for data frame transmission and reception. In addition, the trigger frame may further include information indicating a type of data frames transmitted and received by the respective communication nodes.

The communication nodes STA2 to STA4 that have not obtained the trigger frame transmission opportunity may receive the trigger frame. The communication nodes STA2 to STA4 may obtain information on the resources for transmitting data frames from the received trigger frame, for example, information on resources (e.g., channel, etc.) in which contention for data frame transmission is allowed. In addition, the communication nodes STA2 to STA4 may further obtain information on the type of data frames from the received trigger frame.

In a DCP, the communication nodes STA2 to STA4 may perform random access to a channel in which contention is allowed. Each of the communication nodes STA2 to STA4 may randomly select an arbitrary number from among numbers corresponding to a plurality of channels indicated by the UORA trigger frame, and may transmit data frames through a channel corresponding to the selected number. For example, when channels indicated by the trigger frame are channels 1 to 9, and the STA2 among the communication nodes arbitrarily selects a number 2, the STA2 may transmit a data frame to other communication nodes through a channel 2. As a result of the contention in the TCP, each communication node may transmit a data frame through a different channel.

When the trigger frame further includes information on the type of the data frame, the communication node may transmit a data frame having the obtained type. The communication node whose type of data frame is not matched to the obtained type may not obtain a data frame transmission opportunity in the DCP, and may not perform contention.

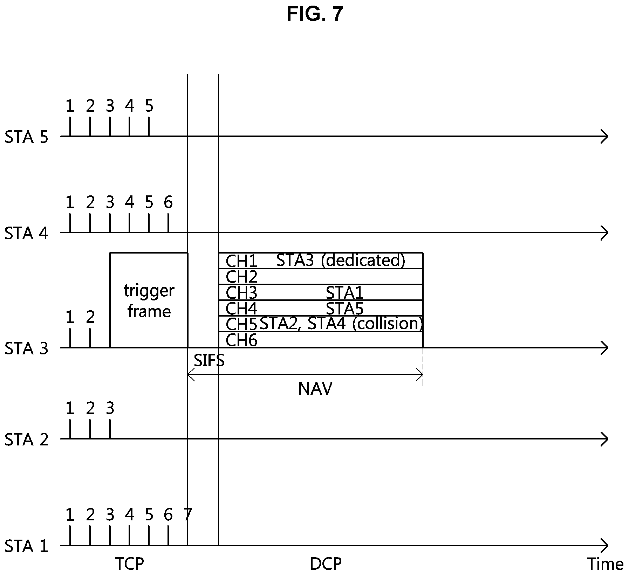

FIG. 7 is a diagram illustrating an exemplary embodiment of a distributed OFDMA communication operation initiated by a trigger frame.

As shown in FIG. 7, a communication system may include a plurality of communication nodes, and each communication node may be a communication node configured identically to the STA shown in FIG. 5.

In a TCP, the plurality of communication nodes STA1 to STA5 may perform contention for trigger frame transmission. As a result of the contention, one communication node (e.g., STA3) among the plurality of communication nodes may obtain a trigger frame transmission opportunity (TXOP). The STA3 may transmit a trigger frame to other communication nodes (i.e., STA1 to STA2 and STA4 to STA5). The trigger frame may include information on resources for transmitting and receiving data frames.

The communication nodes STA1 to STA2 and STA4 to STA5 that have not obtained the trigger frame transmission opportunity may receive the trigger frame. The communication nodes may obtain the information on the resources for transmitting data frames from the received trigger frame. For example, the communication nodes STA1 to STA2 and STA4 to STA5 receiving the trigger frame may obtain information on contention resources (e.g., channel, etc.) for data frame transmission from the trigger frame. In addition, the communication nodes STA1 to STA2 and STA4 to STA5 receiving the trigger frame may further obtain information on the type of the data frames from the trigger frame.

A DCP may be started after a preset time elapses from the time when the transmission/reception of the trigger frame is completed. For example, the DCP may be started after a preset IFS (e.g., SIFS, etc.) elapses after the TCP ends. In the DCP, the communication nodes STA1 to STA5 may transmit data frames through the resources indicated by the trigger frame. The communication nodes may transmit the data frames through respective contention resources (e.g., channels, etc.) indicated by the trigger frame. In the DCP, each communication node may transmit a data frame and simultaneously receive a data frame from another communication node.

The STA3 that has transmitted the trigger frame may transmit a data frame by allocating one of the contention resources. For example, the STA3 may transmit the data frame through a channel 1. When a specific resource (e.g., channel 1) for transmitting the data frame is allocated by the STA3, the trigger frame may further include information on the dedicated resource (e.g., channel 1). The dedicated resource (e.g., channel 1) of the STA3 may be a resource separate from the contention resource, and the communication nodes STA1 to STA2 and STA4 to STA5 receiving the trigger frame may not perform contention in the dedicated resource.

The communication nodes STA1 to STA2 and STA4 to STA5 receiving the trigger frame may perform random access to channels in which contention is allowed (e.g., channels other than the dedicated channel). Each of the communication nodes STA1 to STA2 and STA4 to STA5 may randomly select an arbitrary number from among numbers corresponding to a plurality of channels indicated by the UORA trigger frame, and transmit the data frame through a channel corresponding to the selected number. For example, referring to FIG. 7, the STA1 may select a channel 3, the STA2 and STA4 may select a channel 5, and the STA5 may select a channel 4. The STA1 and STA5 may transmit data frames through the selected channels. However, the STA2 and STA4 may not be able to successfully transmit data frames due to a collision. Specifically, when the STA2 intends to transmit a data frame through the channel 5, it may detect data frame transmission from the STA4 and recognize that a collision occurs.

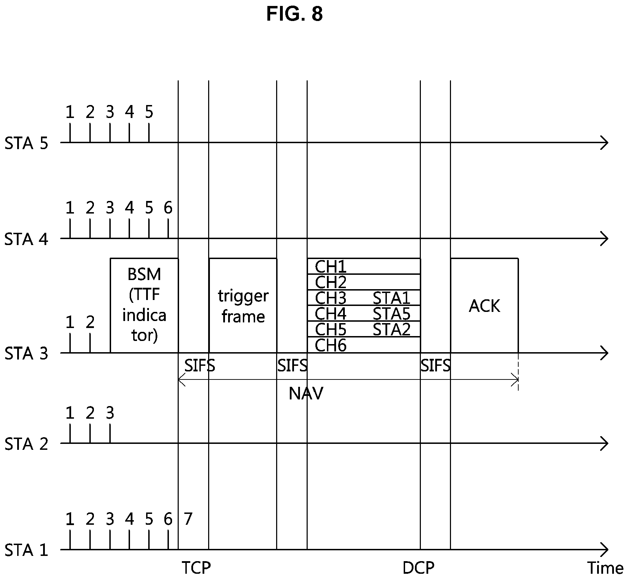

FIG. 8 is a diagram illustrating an exemplary embodiment of a distributed OFDMA communication operation initiated by a data frame.

As shown in FIG. 8, a communication system may include a plurality of communication nodes, and each communication node may be a communication node configured identically to the STA shown in FIG. 1.

Before transmitting a trigger frame in a TCP, communication nodes STA1 to STA5 may perform contention to transmit a data frame (e.g., Basic Safety Message(BSM)). As a result of the contention, one communication node (e.g., STA3) among the plurality of communication nodes may successfully perform a channel access procedure. The STA3 may transmit the data frame to the STA1 to STA2 and STA4 to STA5.

The data frame may further include an indicator indicating that transmission of a trigger frame is scheduled. For example, a MAC header of the data frame may further include a TTF indicator. The TTF indicator may indicate that transmission of a trigger frame is scheduled after a preset IFS (e.g., SIFS) elapses from the time when the data frame is transmitted. In addition, the data frame (e.g., MAC header thereof) may further include information on a data frame transmission time of the communication nodes.

The communication nodes STA1 to STA2 and STA4 to STA5 receiving the data frame may expect to receive the trigger frame after the preset IFS (e.g., SIFS). In addition, the communication nodes may further obtain the information on the data frame transmission time from the received data frame.

The STA3 may transmit the trigger frame to other communication nodes (i.e., STA1 to STA2 and STA4 to STA5) after the preset IFS (e.g., SIFS) elapses. The trigger frame may include information on resources for data frame transmission and reception. In addition, the trigger frame may further include information on the data frame transmission time of the communication nodes. That is, when the MAC header of the data frame does not include information on the data frame transmission time, the trigger frame may include information on the data frame transmission time.

The communication nodes STA1 to STA2 and STA4 to STA5 that have not obtained the data frame transmission opportunity may receive the trigger frame. The communication nodes STA1 to STA2 and STA4 to STA5 may obtain the information on the resources for transmitting the data frames from the received trigger frame, for example, information on the resources (e.g., channel, etc.) in which contention for data frame transmission is allowed.

The communication nodes STA1 to STA2 and STA4 to STA5 receiving the trigger frame may transmit data frames through the resources indicated by the trigger frame in a DCP. The communication nodes receiving the trigger frame may transmit the data frames through the respective resources (e.g., channels) indicated by the trigger frame. In the DCP, each communication node may receive a data frame from another communication node while transmitting a data frame.

The communication nodes STA1 to STA2 and STA4 to STA5 receiving the trigger frame may perform random access to a channel in which contention is allowed. Each of the communication nodes STA1 to STA2 and STA4 to STA5 may randomly select an arbitrary number from among numbers corresponding to a plurality of channels indicated by the UORA trigger frame, and transmit a data frame through a channel corresponding to the selected number.

The STA3 may receive the data frame from each of the communication nodes. The STA3 may detect whether a data frame collision occurs in each resource (e.g., channel). The STA3 may transmit an ACK to communication nodes (e.g., STA1, STA2, and STA5) that successfully transmitted the data frames. For example, the STA3 may report whether the transmission of the data frame is successful for each channel. The ACK may include a combination of ID information and reception status information (ACK or NACK) for each resource.

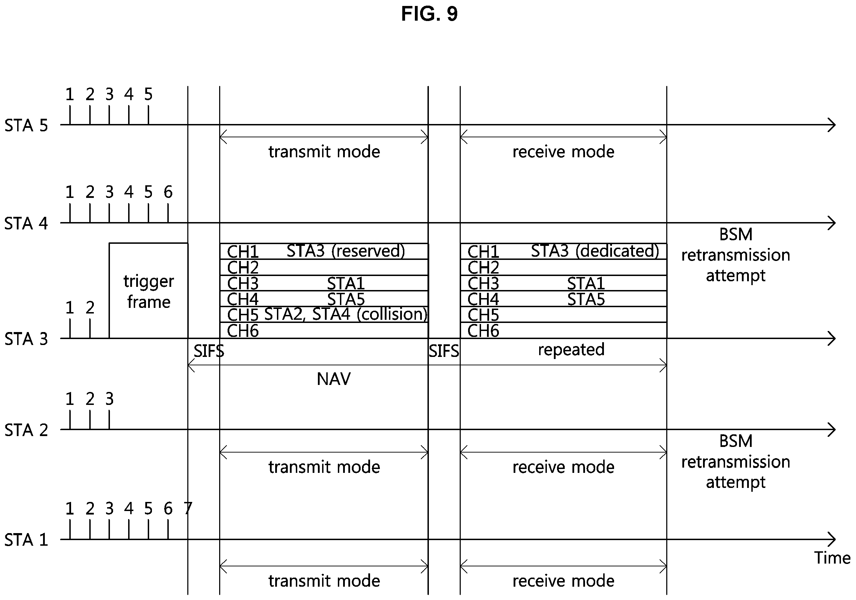

FIG. 9 is a diagram illustrating an exemplary embodiment of a distributed OFDMA communication operation and a retransmission operation initiated by a trigger frame.

As shown in FIG. 9, a communication system may include a plurality of communication nodes, and each communication node may be a communication node configured identically to the STA shown in FIG. 1.

In a TCP, the plurality of communication nodes may perform contention for trigger frame transmission. As a result of the contention, one communication node (e.g., STA3) among the plurality of communication nodes may obtain a trigger frame transmission opportunity. The STA3 may transmit a trigger frame to other communication nodes STA1 to STA2 and STA4 to STA5. The trigger frame may include information on resources for data frame transmission and reception.

The communication nodes STA1 to STA2 and STA4 to STA5 that have not obtained the trigger frame transmission opportunity may receive the trigger frame. The communication nodes STA1 to STA2 and STA4 to STA5 may obtain the information on the resources for transmitting data frames from the received trigger frame. For example, the communication nodes STA1 to STA2 and STA4 to STA5 receiving the trigger frame may obtain information on contention resources (e.g., channels, etc.) for transmitting the data frame from the trigger frame. In addition, the communication nodes STA1 to STA2 and STA4 to STA5 receiving the trigger frame may further obtain information on a type of data frames from the trigger frame.

A DCP may be started after a preset time elapses from the time when the transmission/reception of the trigger frame is completed. For example, the DCP may be started after a preset IFS (e.g., SIFS, etc.) elapses after the TCP ends. The DCP may include a data frame transmission period (i.e., transmit mode) of the communication nodes STA1 to STA2 and STA4 to STA5 and a data frame reception period (i.e., receive mode) of the communication nodes.

The transmission period of the DCP may be started after the preset IFS (e.g., SIFS) elapses from the time when the transmission/reception of the trigger frame is completed. In the transmission period of the DCP, the communication nodes STA1 to STA2 and STA4 to STA5 may transmit data frames through the resources indicated by the trigger frame. The communication nodes may transmit the data frames through respective contention resources (e.g., channels, etc.) indicated by the trigger frame. In the DCP, each communication node may transmit a data frame and simultaneously receive a data frame from another communication node.

The STA3 that has transmitted the trigger frame may transmit a data frame by allocating one (e.g., channel 1) of the contention resources. When a specific resource for transmitting the data frame is allocated by the communication node transmitting the trigger frame, the trigger frame may further include information on the dedicated resource (e.g., channel 1). The dedicated resource (e.g., channel 1) of the STA3 may be a resource separate from the contention resources, and the communication nodes STA1 to STA2 and STA4 to STA5 receiving the trigger frame may not compete in the dedicated resource.

The communication nodes STA1 to STA2 and STA4 to STA5 receiving the trigger frame may perform random access to channels in which contention is allowed (e.g., channels other than the dedicated channel). Each of the communication nodes STA1 to STA2 and STA4 to STA5 may randomly select an arbitrary number from among numbers corresponding to a plurality of channels indicated by the UORA trigger frame, and transmit the data frame through a channel corresponding to the selected number. For example, referring to FIG. 9, the STA1 may select a channel 3, the STA2 and STA4 may select a channel 5, and the STA5 may select a channel 4. The STA1 and STA5 may transmit data frames through the selected channels. However, the STA2 and STA4 may not be able to successfully transmit data frames due to collision.

The reception period of the DCP may be started after a preset IFS (e.g., SIFS) elapses from the time when the DCP transmission period ends. The communication node that has transmitted the trigger frame in the DCP transmission period may retransmit the data frames received through the contention resources to the respective communication nodes. For example, the communication node that has transmitted the trigger frame may transmit the data frame through the channel 1, which is the dedicatedly-allocated channel. In addition, the communication node may retransmit the data frame of the STA1 through the channel 3 and may retransmit the data frame of the STA5 through the channel 4.

The communication nodes receiving the retransmitted data frames in the reception period of the DCP may identify whether a collision occurs when transmitting the data frames. For example, the data frame may not be received through the channel 5, and the STA2 (or STA4) may identify that transmission of the data frame has failed due to a collision. The STA2 (or STA4) may attempt to retransmit the data frame after the reception period of the DCP ends.

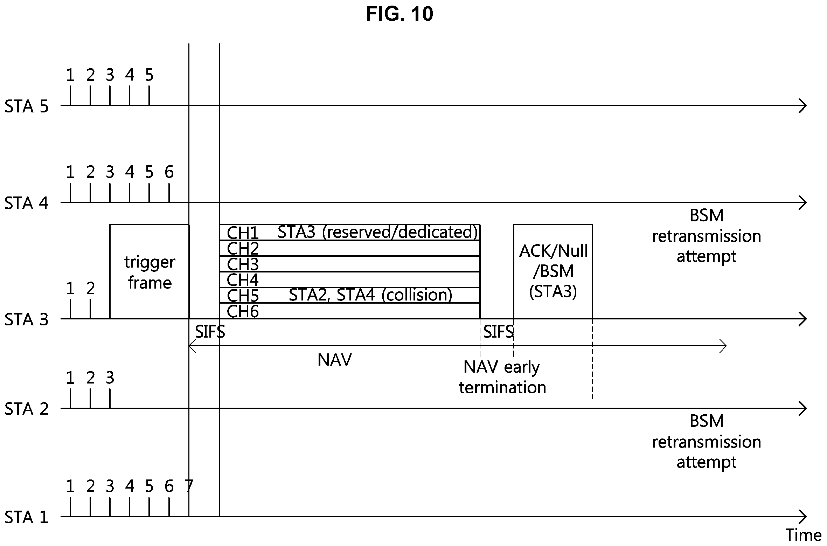

FIG. 10 is a conceptual diagram illustrating an exemplary embodiment of a distributed OFDMA communication operation initiated by a trigger frame.

As shown in FIG. 10, a communication system may include a plurality of communication nodes, and each communication node may be a communication node configured identically to the STA shown in FIG. 1.

In a TCP, the plurality of communication nodes STA1 to STA5 may perform contention for trigger frame transmission. As a result of the contention, one communication node (e.g., STA3) among the plurality of communication nodes may obtain a trigger frame transmission opportunity. The STA3 may transmit a trigger frame to other communication nodes STA1 to STA2 and STA4 to STA5.

The communication nodes STA1 to STA2 and STA4 to STA5 that have not obtained the trigger frame transmission opportunity may receive the trigger frame. The communication nodes STA1 to STA2 and STA4 to STA5 may obtain information on resources for transmitting data frames from the received trigger frame.

A DCP may be started after a preset IFS (e.g., SIFS) elapses from the time when the transmission/reception of the trigger frame is completed. In the DCP, the communication nodes STA1 to STA2 and STA4 to STA5 may transmit data frames through the resources indicated by the trigger frame. The communication nodes may transmit the data frames through respective contention resources (e.g., channels, etc.) indicated by the trigger frame. In the DCP, each communication node may transmit a data frame and simultaneously receive a data frame from another communication node.

The STA3 that has transmitted the trigger frame may transmit a data frame by allocating one (e.g., channel 1) of the contention resources. When a specific resource for transmitting the data frame is allocated by the communication node transmitting the trigger frame, the trigger frame may further include information on the dedicated resource (e.g., channel 1). The dedicated resource (e.g., channel 1) of the STA3 may be a resource separate from the contention resources, and the communication nodes STA1 to STA2 and STA4 to STA5 receiving the trigger frame may not perform contention in the dedicated resource.

The communication nodes receiving the trigger frame may perform random access to channels in which contention is allowed. The communication node may randomly select an arbitrary number from among numbers corresponding to a plurality of channels indicated by the UORA trigger frame, and transmit a data frame through a channel corresponding to the selected number. For example, referring to FIG. 9, the STA2 and STA4 may select a channel 5. A data frame transmitted by the STA2 may collide with a data frame transmitted by the STA4. Accordingly, the STA2 and STA4 may not be able to transmit data frames in the transmission period of the TCP.

The STA3 may not receive a data frame from each of the communication nodes STA1 to STA2 and STA4 to STA5. After a preset IFS (e.g., SIFS) elapses from the time when the transmission period of the DCP ends, the STA3 may transmit at least one of an ACK, a null frame, and a data frame. A transmission time (Duration) of the null frame (or data frame) may be set to zero. The communication nodes STA1 to STA2 and STA4 to STA5 may receive the frame from the STA3, and terminate the DCP.

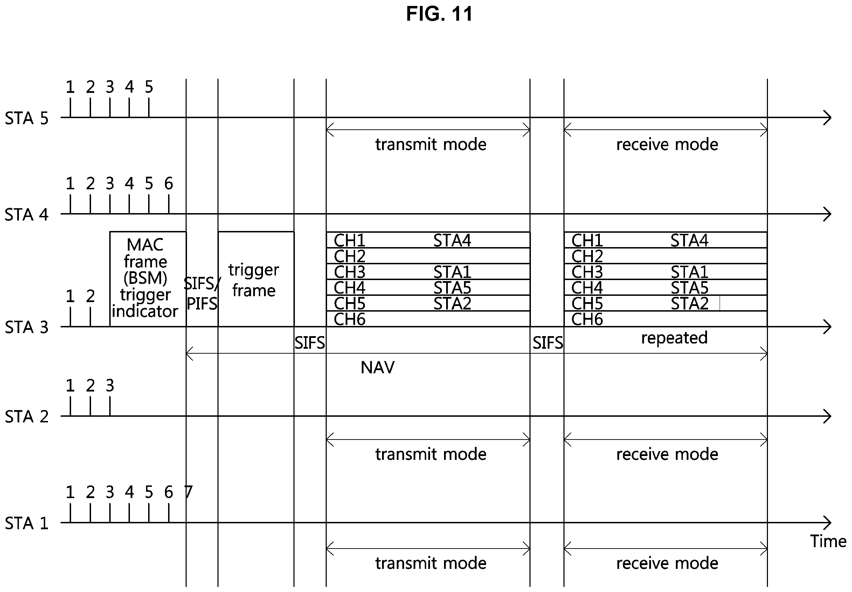

FIG. 11 is a diagram illustrating an exemplary embodiment of a distributed OFDMA communication operation initiated by a data frame.

As shown in FIG. 11, a communication system may include a plurality of communication nodes, and each communication node may be a communication node configured identically to the STA shown in FIG. 1.

Before transmitting a trigger frame in a TCP, the communication nodes STA1 to STA5 may perform contention to transmit data frames. As a result of the contention, one communication node (e.g., STA3) among the plurality of communication nodes may successfully perform a channel access procedure. The STA3 may transmit a data frame.

The data frame may further include an indicator indicating that transmission of a trigger frame is scheduled. For example, a MAC header of the data frame may further include a TTF indicator. The TTF indicator may indicate that transmission of a trigger frame is scheduled after a preset IFS (e.g., SIFS) elapses from a time when the data frame is transmitted. In addition, the data frame (e.g., MAC header thereof) may further include information on a data frame transmission time of the communication nodes.

The communication nodes receiving the data frame may expect to receive a trigger frame after the preset IFS (e.g., SIFS). In addition, the communication nodes may further obtain the information on the data frame transmission time from the received data frame.

The communication node that has transmitted the data frame may transmit a trigger frame to other communication nodes after the preset IFS (e.g., SIFS) elapses. The trigger frame may include information on resources for data frame transmission and reception. In addition, the trigger frame may further include information on the data frame transmission time of the communication nodes. That is, when the MAC header of the data frame does not include information on the data frame transmission time, the trigger frame may include information on the data frame transmission time.

The communication nodes that have not obtained a data frame transmission opportunity may receive the trigger frame. The communication nodes receiving the trigger frame may obtain the information on the resources for transmitting the data frames from the received trigger frame, for example, information on the resources (e.g., channel, etc.) in which contention for data frame transmission is allowed.

A DCP may be started after a preset time elapses from the time when the transmission/reception of the trigger frame is completed. For example, the DCP may be started after a preset IFS (e.g., SIFS, etc.) elapses after the TCP ends. The DCP may include a data frame transmission period (i.e., transmit mode) of the communication nodes STA1 to STA2 and STA4 to STA5 and a data frame reception period (i.e., receive mode) of the communication nodes.

The transmission period of the DCP may be started after a preset IFS (e.g., SIFS) elapses from the time when the transmission/reception of the trigger frame is completed. In the transmission period of the DCP, the communication nodes receiving the trigger frame may transmit data frames through the resources indicated by the trigger frame. The communication nodes receiving the trigger frame may transmit the data frames through the respective resources (e.g., channels) indicated by the trigger frame.

The communication nodes receiving the trigger frame may perform random access to channels in which contention is allowed. The communication node may randomly select an arbitrary number from among numbers corresponding to a plurality of channels indicated by the UORA trigger frame, and transmit a data frame through a channel corresponding to the selected number.

The communication node may randomly select an arbitrary number from among numbers corresponding to a plurality of channels indicated by the UORA trigger frame, and transmit a data frame through a channel corresponding to the selected number. For example, referring to FIG. 11, the STA1 may select a channel 3, the STA2 may select a channel 5, the STA4 may select a channel 1, and the STA5 may select a channel 4. Each of the communication nodes STA1 to STA2 and STA4 to STA5 may transmit a data frame through the selected channel. The communication node that has transmitted the trigger frame may receive the data frames from the respective communication nodes STA1 to STA2 and STA4 to STA5.

The reception period of the DCP may be started after a preset IFS (e.g., SIFS) elapses from the time when the transmission period of the DCP ends. The communication node that has transmitted the trigger frame in the transmission period of the DCP may retransmit the data frames received through contention resources to the respective communication nodes. For example, the communication node that has transmitted the trigger frame may retransmit the data frames through the channel 1 and the channels 3 to 5.

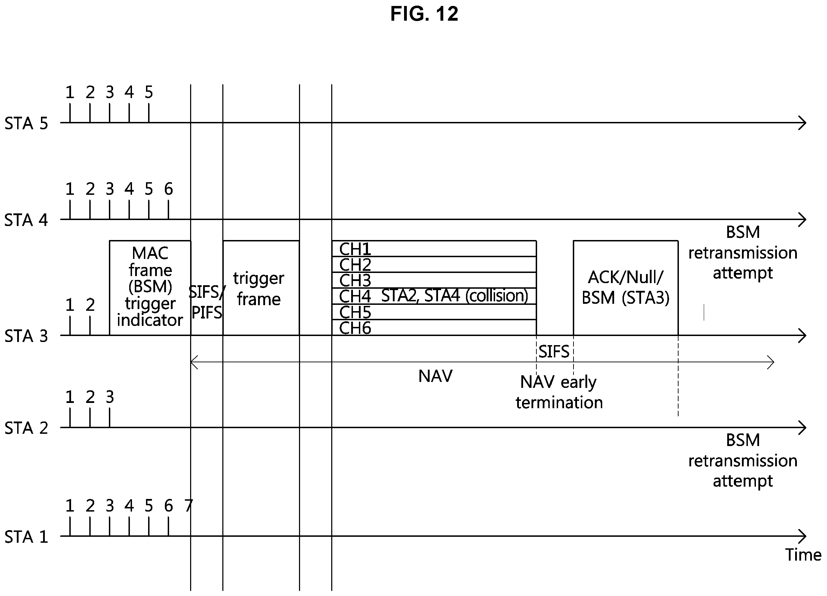

FIG. 12 is a diagram illustrating an exemplary embodiment of a distributed OFDMA communication operation initiated by a data frame.

As shown in FIG. 12, a communication system may include a plurality of communication nodes, and each communication node may be a communication node configured identically to the STA shown in FIG. 1.

Before transmitting a trigger frame in a TCP, the communication nodes STA1 to STA5 may perform contention for data frame transmission. As a result of the contention, one communication node (e.g., STA3) among the plurality of communication nodes may successfully perform a channel access procedure. The STA3 may transmit a data frame to other communication nodes STA1 to STA2 and STA4 to STA5.

The STA3 that has transmitted the data frame may transmit a trigger frame to other communication nodes STA1 to STA2 and STA4 to STA5 after a preset IFS (e.g., SIFS) elapses. The communication nodes STA1 to STA2 and STA4 to STA5 that have not obtained a trigger frame transmission opportunity may receive the trigger frame. The communication nodes STA1 to STA2 and STA4 to STA5 receiving the trigger frame may obtain information on resources for transmitting data frames from the received trigger frame.

After a preset IFS (e.g., SIFS, etc.) elapses from the time when the transmission/reception of the trigger frame is completed, a DCP (e.g., a transmission period of the DCP) may be started. In the transmission period of the DCP, the communication nodes STA1 to STA2 and STA4 to STA5 receiving the trigger frame may transmit data frames through the resources indicated by the trigger frame.

The communication nodes STA1 to STA2 and STA4 to STA5 receiving the trigger frame may perform random access to channels in which contention is allowed. Each communication node may randomly select an arbitrary number among numbers corresponding to a plurality of channels indicated by the UORA trigger frame, and may transmit a data frame through a channel corresponding to the selected number. For example, referring to FIG. 12, the STA2 and STA4 may select a channel 5. The data frame transmitted by the STA2 may collide with the data frame transmitted by the STA4. Accordingly, the STA2 and STA4 may not be able to transmit data frames in the transmission period of the DCP.

The STA3 that has transmitted the trigger frame may not receive the data frames from the respective communication nodes (e.g., STA2 and STA4). After a preset IFS (e.g., SIFS) elapses from the time when the transmission period of the DCP ends, the STA3 may transmit an ACK frame, a null frame, or a data frame.

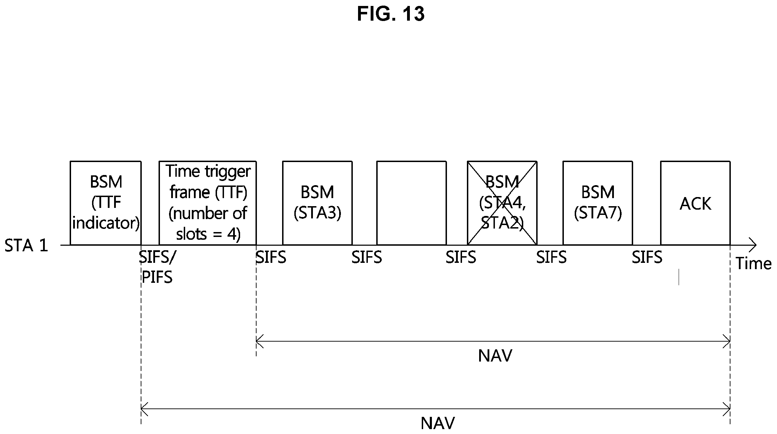

FIG. 13 is a diagram illustrating an exemplary embodiment of a TDMA communication operation initiated by a data frame.

As shown in FIG. 13, a communication system may include a plurality of communication nodes, and each communication node may be a communication node configured identically to the STA shown in FIG. 1.

The communication nodes STA1 to STA4 and STA7 may perform contention for data frame transmission. As a result of the contention, one communication node STA1 among the plurality of communication nodes may successfully perform a channel access procedure. For example, a communication node that has not received a data frame from another communication node among the plurality of communication nodes may determine that it obtains a transmission opportunity (TXOP). The STA1 having performed the channel access procedure successfully may transmit a data frame.

The data frame may further include an indicator indicating that transmission of a trigger frame is scheduled. Specifically, the trigger frame may be a time trigger frame (TTF), and a MAC header of the data frame may further include a TTF indicator. The data frame including the TTF indicator may be referred to as a trigger indication frame.

The TTF indicator may indicate that transmission of the trigger frame is scheduled after a preset IFS elapses from the time when the data frame is transmitted. The preset IFS may be an SIFS, or may be an RIFS which is preset IFS shorter than the SIFS. The communication nodes receiving the data frame may expect to receive the trigger frame after the preset IFS (e.g., SIFS or RIFS).

The STA1 that has transmitted the data frame may transmit the trigger frame to other communication nodes STA2 to STA4 and STA7 after the preset IFS (e.g., SIFS or RIFS) elapses. The trigger frame may include information on resources for data frame transmission and reception. For example, the trigger frame may include information on the number of time slots for data frame transmission by multiple users. Each of the time slots may be arranged at regular IFS (e.g., SIFS) intervals in the same frequency region. The trigger frame may include identifier information indicating other communication nodes STA2 to STA4 and STA7 performing communication in the data transmission period. A communication node not indicated by the trigger frame may receive the trigger frame, and may set a NAV based on the received trigger frame.

The trigger frame may further include information on a data frame transmission time of the communication nodes STA2 to STA4 and STA7. Specifically, the trigger frame (e.g., MAC header thereof) may include time information of each of time slots for data frame transmission by multiple users, information on the interval (e.g., IFS) between the time slots, a type of data to be transmitted through the time slot, and/or the like.

The communication nodes STA2 to STA4 and STA7 that have not obtained the trigger frame transmission opportunity may receive the trigger frame. The communication nodes STA2 to STA4 and STA7 receiving the trigger frame may obtain the information on the resources for data frame transmission from the received trigger frame, for example, information on resources (e.g., time slots, etc.) in which contention for data frame transmission is allowed.

The communication nodes STA2 to STA4 and STA7 receiving the trigger frame may transmit data frames through resources (e.g., time slots) indicated by the trigger frame. The communication nodes STA2 to STA4 and STA7 receiving the trigger frame may transmit the data frames through the respective resources (e.g., time slots) indicated by the trigger frame. In a DCP, each communication node may transmit a data frame and simultaneously receive a data frame from another communication node.

The communication nodes receiving the trigger frame may perform random access to a resource (e.g., time slot) in which contention is allowed. The communication node may randomly select an arbitrary number within the contention window. In addition, each of the communication nodes receiving the trigger frame may transmit a data frame through a time slot corresponding to the selected number. For example, referring to FIG. 13, the STA3 may select a time slot 1, the STA2 and STA4 may select a time slot 3, and the STA7 may select a time slot 4. Each of the STA3 and STA7 may transmit the data frame through the selected time slot. However, the STA2 and STA4 may not be able to successfully transmit data frames due to a collision. Specifically, when the STA2 intends to transmit the data frame through the time slot 3, it may detect data frame transmission from the STA4 and detect occurrence of a collision.

The communication node that has transmitted the trigger frame may receive the data frames from the respective communication nodes. The communication node that has transmitted the trigger frame may detect whether a data frame collision occurs in each resource (e.g., time slot). The communication node that has transmitted the trigger frame may transmit a reception response frame for each of the data frames received through the respective resources. The reception response frame may include reception response information for each of the received data frames. For example, the communication node that has transmitted the trigger frame may transmit ACK for the data frames to the communication nodes that have successfully transmitted the data frames.

That is, the communication node that has transmitted the trigger frame may report whether data transmission is successful for each time slot. The communication node that has transmitted the trigger frame may report the transmission result (success or failure) of the data frame by using an identifier of each communication node that has transmitted the data frame. Alternatively, the communication node that has transmitted the trigger frame may report the transmission result (success or failure) of the data frame by using an identifier of each time slot in which the data frame is transmitted.

The communication nodes that failed to transmit the data frame may transmit the data frame through individual contention. The communication nodes that perform contention in an individual contention period may adjust the size of the contention window. For example, the communication node may set the size of the contention window to be twice the size of the existing contention window. Alternatively, the communication node may set the size of the contention window to be half the size of the existing contention window.

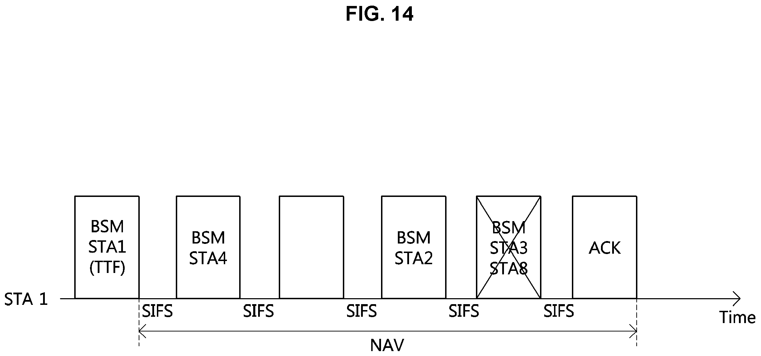

FIG. 14 is a diagram illustrating a second exemplary embodiment of a TDMA communication operation initiated by a data frame.

As shown in FIG. 14, a communication system may include a plurality of communication nodes, and each communication node may be a communication node configured identically to the STA shown in FIG. 1.

The communication nodes may perform contention for data frame transmission. As a result of the contention, one communication node STA1 among the plurality of communication nodes may successfully perform a channel access procedure. For example, a communication node that has not received a data frame from another communication node among the plurality of communication nodes may determine that it obtains a transmission opportunity(TXOP). The STA1 having performed the channel access procedure successfully may transmit a data frame.

The data frame may be a frame replacing the TTF. That is, the data frame may further include TTF information, which is information for data frame transmission by multiple users. Alternatively, the frame transmitted by the STA1 may be a TTF frame including a data unit. A data frame including the TTF information (or the TTF frame including a data unit) may be referred to as a TTF-data frame. Specifically, the TTF-data frame (e.g., MAC header thereof) may include time information of each of time slots for data frame transmission by multiple users, information on an interval (e.g., IFS) between the time slots, and information on a type of data to be transmitted through the time slot, and the like. Each of the time slots may be arranged at a regular IFS (e.g., SIFS) interval in the same frequency region.

The TTF-data frame may include identifier information indicating other communication nodes STA2 to STA4 and STA8 performing communication in the data transmission period. A communication node not indicated by the TTF-data frame may receive the TTF-data frame, and may set a NAV based on the received TTF-data frame.

The communication nodes STA2 to STA4 and STA8 that have not obtained the opportunity to transmit the TTF-data frame may receive the TTF-data frame. The communication nodes STA2 to STA4 and STA8 receiving the TTF-data frame may obtain information on resources for transmitting data frames from the received TTF-data frame, for example, information on resources (e.g., time slots, etc.) in which contention is allowed. The communication nodes STA2 to STA4 and STA8 receiving the TTF-data frame may expect that the resources for data frame transmission are started after a preset IFS (e.g., SIFS).

The communication nodes STA2 to STA4 and STA8 receiving the TTF-data frame may transmit data frames through the resources (e.g., time slots) indicated by the TTF information. The communication nodes STA2 to STA4 and STA8 receiving the TTF information may transmit the data frames through the respective resources (e.g., time slots) indicated by the trigger frame. Each of the communication nodes may receive a data frame from another communication node while simultaneously transmitting a data frame.

The communication nodes STA2 to STA4 and STA8 receiving the TTF-data frame may perform random access to channels in which contention is allowed. Each communication node may randomly select an arbitrary number within the contention window. In addition, each of the communication nodes receiving the TTF-data frame may transmit a data frame through a time slot corresponding to the selected number. For example, referring to FIG. 14, the STA4 may select a time slot 1, the STA2 may select a time slot 3, and the STA3 and STA8 may select a time slot 4. Each of the STA4 and STA2 may transmit the data frame through the selected time slot. However, the STA3 and STA8 may not be able to successfully transmit data frames due to a collision. Specifically, when the STA3 intends to transmit the data frame through the time slot 4, it may detect data frame transmission from the STA8 and detect occurrence of a collision.

The STA1 that has transmitted the TTF-data frame may receive the data frames from the respective communication nodes STA2 to STA4 and STA8. The STA1 may detect whether a data frame collision occurs in each resource (e.g., time slot). The STA1 may transmit a reception response frame (e.g., frame including ACKs for the data frames) to the communication nodes STA2 and STA4 that have successfully transmitted the data frames.

That is, the STA1 that has transmitted the trigger frame may report whether data transmission is successful for each time slot. The STA1 may report the transmission result (success or failure) of the data frame by using an identifier of each of the communication nodes STA2 and STA4 that have transmitted the data frames. Alternatively, the STA1 may report the transmission result (success or failure) of the data frame by using an identifier of each time slot in which the data frame is transmitted.

The communication nodes STA3 and STA8 that failed to transmit the data frames may transmit the data frames through individual contention. The communication nodes STA3 and STA8 performing contention in an individual contention period may adjust the size of the contention window. For example, the communication node STA3 or STA8 may set the size of the contention window to be twice the size of the existing contention window. Alternatively, the communication node (STA3 or STA8) may set the size of the contention window to be half the size of the existing contention window.

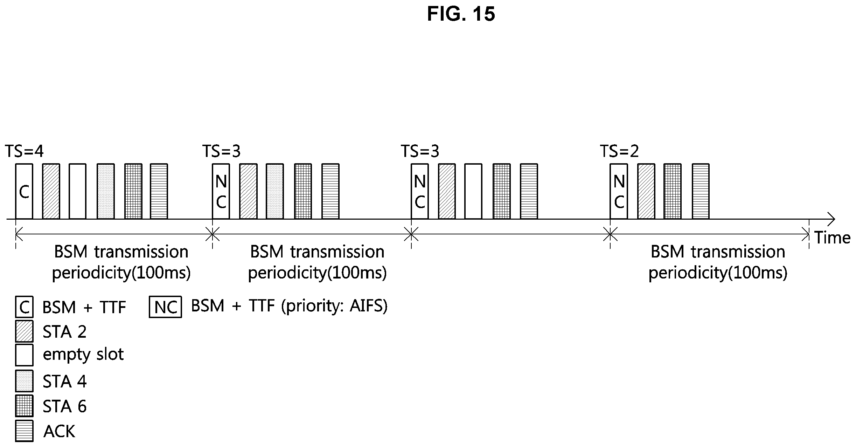

FIG. 15 is a diagram illustrating a third exemplary embodiment of a TDMA communication operation initiated by a data frame.

As shown in FIG. 15, a communication system may include a plurality of communication nodes, and each communication node may be a communication node configured identically to the STA shown in FIG. 1.

The communication nodes may perform contention for TTF-data frame transmission. As a result of the contention, one communication node STA1 among the plurality of communication nodes may successfully perform a channel access procedure. For example, a communication node that has not received a TTF-data frame from another communication node among the plurality of communication nodes may determine that it obtains a transmission opportunity(TXOP). The STA1 having performed the channel access procedure successfully may transmit a TTF-data frame. The STA1 may periodically transmit the TTF-data frame according to a preset periodicity.

That is, the STA1 may periodically transmit the TTF-data frame. A TTF-data frame initially transmitted by the STA1 may be referred to as a contention TTF-data frame, and a TTF-data frame transmitted by the STA1 after the first data frame may be referred to as a contention-free TTF-data frame. The contention TTF-data frame may include configuration information of a contention data transmission period in which communication nodes competitively transmit data, and the contention-free TTF-data frame may include configuration information of a contention-free data transmission period in which communication nodes transmit data in a contention-free manner.

The communication nodes STA2, STA4, and STA6 receiving the contention TTF-data frame may perform contention for data frame transmission based on the TTF information. The communication nodes STA2, STA4, and STA6 may transmit data frames based on the contention result. The STA1 that has transmitted the contention TTF-data frame may receive the data frames from the respective communication nodes STA2, STA4, and STA6. The STA1 may detect whether a data frame collision occurs in each resource (e.g., time slot). The STA1 may transmit a reception response frame (e.g., frame including ACK for the data frames) to the communication nodes STA2, STA4, and STA6 that have successfully transmitted the data frames.

The STA1 that has transmitted the ACK for the data frames may transmit the contention-free TTF-data frame. The STA1 may configure TTF information of the contention-free TTF-data frame based on the transmission result of the data frames. The STA1 may transmit the contention-free TTF-data frame.

For example, the STA1 that has transmitted the contention TTF-data frame may change time slot configuration (e.g., the number of time slots) according to the transmission result of the data frame through each time slot. Specifically, referring to FIG. 11, when a time slot 2 is empty, the communication node may adjust the number of time slots of the TTF from 4 to 3. When the number of time slots is less than or equal to a preset number as a result of changing the TTF configuration, the communication nodes may compete and transmit contention TTF-data frames according to the contention result.

Alternatively, the STA1 may change configuration of each time slot without changing information on the number of time slots of the TTF according to the transmission result of the data frame through each time slot. Specifically, the STA1 may allocate an empty time slot among the time slots as a contention slot, and may allocate each time slot to the communication node that has successfully transmitted the data frame.

The communication nodes STA2, STA4, and STA6 receiving the contention-free TTF-data frame may transmit the data frames based on the TTF information. The communication nodes STA2, STA4, and STA6 receiving the contention-free TTF-data frame may not perform contention procedures for data frame transmission.

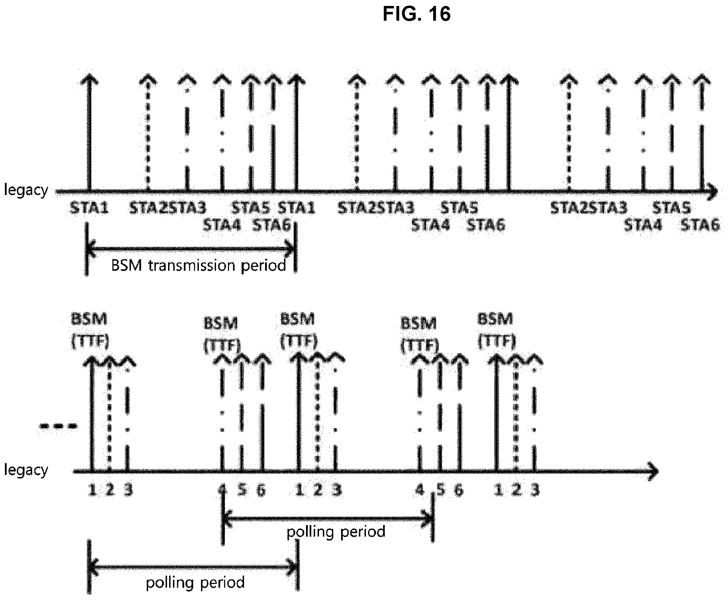

FIG. 16 is a diagram illustrating an exemplary embodiment of a TDMA communication operation.

As shown in FIG. 16, a communication system may include a plurality of communication nodes, and each communication node may be a communication node configured identically to the STA shown in FIG. 1.

The communication nodes STA1 to STA6 may transmit data frames by performing contention according to a preset data frame transmission period. The communication node STA1 that first transmitted a data frame among the communication nodes perform polling so that the other communication nodes STA2 to STA6 transmit data frames.

For example, when the STA1 among the plurality of communication nodes transmits a data frame for the first time, the STA1 may perform polling so that other communication nodes STA2 to STA6 transmit data frames. The STA1 may transmit a TTF-data frame, and the communication nodes STA2 to STA6 receiving the TTF-data frame may transmit data frames according to a preset data frame transmission period based on the TTF-data frame. The preset data frame transmission period may be referred to as a polling period.

Referring to FIG. 16, the STA1 has transmitted the TTF-data frame, and the communication nodes that need to transmit data frames within the polling period may be the STA2 to STA5. The STA2 to STA5 may perform contention in resources indicated by the TTF-data frame, and as a result of the contention, the STA2 and STA3 may transmit data frames. The STA2 and STA3 may transmit data frames without additional contention every polling period.

One communication node (e.g., STA4) among the communication nodes that did not obtain the data frame transmission opportunity as a result of the contention may transmit a TTF-data frame. After the TTF-frame is transmitted by the STA4, the STA5 and STA6 may perform contention within the polling period, and may transmit a data frame as a result of the contention. The STA5 and STA6 may transmit data frames without additional contention every polling period.

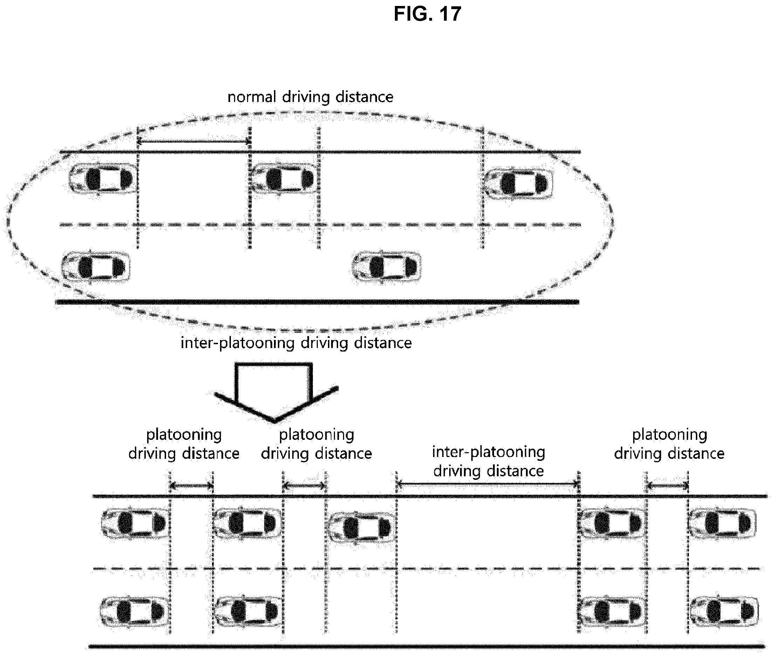

FIG. 17 is a diagram illustrating an exemplary embodiment of a normal driving vehicle and a platooning vehicle.

As shown in FIG. 17, a V2X communication network may include a plurality of vehicles each having a communication node (e.g., STA). The vehicle nodes constituting the V2X communication network may drive normally, and a distance between the vehicles (and communication nodes) that normally drive may be separated by a normal driving distance.

The vehicle nodes constituting the V2X communication network may perform platooning driving or platoon driving. Specifically, vehicles located within a preset distance and having the same direction and speed may perform platooning, and communication nodes of the vehicles performing platooning may perform platooning communication. The communication node performing the platooning may configure a platooning group by recruiting communication nodes located in a coverage smaller than a coverage of a data frame. The communication nodes for performing platooning may be spaced apart by a platooning driving distance, and the platooning driving distance may be less than or equal to the normal driving distance. The communication nodes constituting the same platooning group may exchange vehicle driving information by transmitting and receiving data frames to and from each other.

The V2X communication network may include different platooning groups. The communication nodes belonging to different platooning groups may be separated by at least an inter-platooning driving distance, and the inter-platooning driving distance may be greater than or equal to the normal driving distance. The communication nodes belonging to different platooning groups may exchange vehicle driving information by transmitting and receiving data frames to and from each other. Specifically, one representative communication node among the communication nodes belonging to the platooning group may transmit an intelligent transport system (ITS) message such as a basic safety message (BSM) to communication nodes belonging to another platooning group.

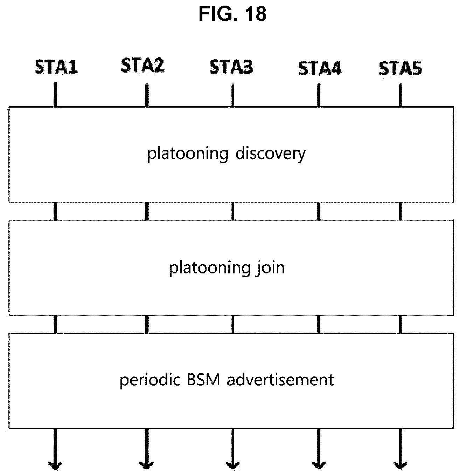

FIG. 18 is a diagram illustrating an exemplary embodiment of an operation of communication nodes for performing platooning communication.

As shown in FIG. 18, communication nodes for performing platooning communication may discover communication nodes that will constitute a platooning group. Each communication node moves in the same direction and may discover other communication nodes maintaining the same speed for a certain period of time. The communication node may periodically transmit a platooning polling request frame. A communication node (e.g., STA1) transmitting the polling frame among the communication nodes for performing platooning communication may be referred to as a platooning configuration node, and communication nodes (e.g., STAs 2 to 5) receiving the polling frame may be referred to as platooning configured nodes. The platooning group used in the present disclosure may be interpreted and operated in the same meaning as a BSS as a concept of grouping into one communication area.

The platooning configuration node STA1 may transmit (e.g., multicast or broadcast) the polling frame within a coverage (e.g., within several hundred meters) that is usually less than a maximum transmission coverage (e.g., 1000 m for 802.11p or 2000 m for 802.11bd). The polling frame may be configured differently depending on a type of the vehicle. The polling frame may further include an indicator for identifying the length of the vehicle, such as a passenger car, a bus, or a truck, to determine a type of targets to be recruited.

Platooning target nodes STA2 to STA5 may receive the polling frame. In addition, each of the platooning target nodes STA2 to STA5 may transmit a platooning indication frame in response to the received polling frame. The platooning configuration node STA1 may receive the responses (i.e., platooning indication frames) to the polling frame from the platooning target nodes. The STA1 may transmit the polling frame a plurality of times for a preset time. In addition, the STA1 may determine the communication node that has transmitted the platooning indication frame for the plurality of the polling frames as the platooning target node.

The communication nodes STA1 to STA5 for performing platooning communication may perform a platooning group join operation. The communication node (e.g., STA1) for performing platooning communication may transmit a platooning group join request frame to the communication nodes (e.g., STA2 to STA5) discovered in the platooning discovery step. Each of the communication nodes (e.g., STA2 to STA5) receiving the platooning join request frame may transmit a platooning group join response frame. The STA1 may receive the platooning group join response frames, and may configure communication nodes (e.g., STA2 to STA5) transmitting the platooning join response frames as a platooning communication group. The platooning group join request frame may be an association frame of the wireless LAN or a separate frame.

The communication nodes STA1 to STA5 performing the platooning communication may periodically broadcast data frames including platooning information to the communication nodes outside the platooning group or within the platooning group (periodic BSM advertisement). The communication nodes constituting the platooning group may periodically exchange driving information. In order to ensure a responsiveness of the communication node to a driving event, the communication nodes may transmit the platooning information at a period shorter than a normal data frame transmission period (e.g., 100 ms). A representative communication node of the platooning group (e.g., a communication node located at the frontmost or rearmost among the platooning communication nodes) may transmit platooning information to communication nodes outside of the platooning. The representative communication node of the platooning group may transmit the driving information within a coverage of normal transmission (e.g., 1000 m in case of 802.11p or 2000 m in case of 802.11bd).

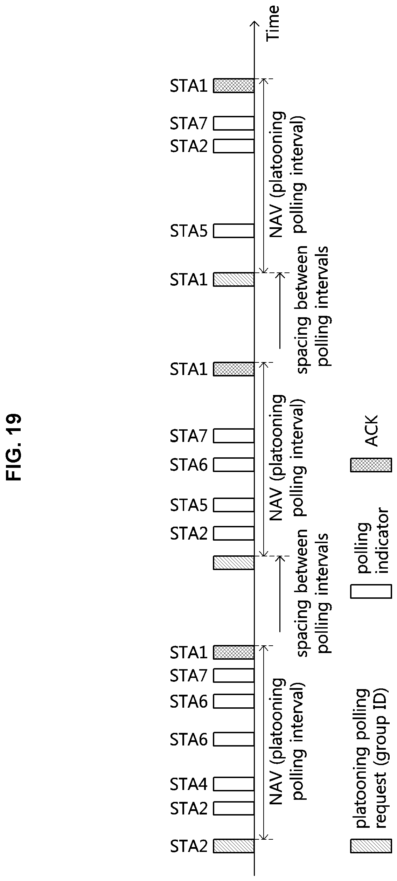

FIG. 19 is a diagram illustrating a first exemplary embodiment of an operation of communication nodes for performing platooning group discovery.

As shown in FIG. 19, a communication node (e.g., platooning configuration node such as the STA 1) may discover communication nodes (e.g., platooning target node such as STA2 to STA7) to configure a platooning group. That is, the platooning configuration node may perform polling to discover platooning target nodes moving in the same direction and at the same speed. Communication nodes that do not belong to a platooning group but desire to perform platooning may perform a wireless LAN contention procedure. As a result of the contention, a communication node may transmit a polling frame requesting platooning.

The platooning target nodes may receive the polling frame from the platooning configuration node. The polling frame may include information on transmission periods for data transmission of the platooning target nodes. In addition, the polling frame may include information on identifiers of communication nodes that will receive the polling frame.

The communication nodes may receive the polling frame. Each of communication nodes not indicated by the polling frame may set a NAV based on the polling frame. Among the communication nodes receiving the polling frame, communication nodes (i.e., platooning target nodes) indicated by the polling frame may perform contention during a platooning polling interval. As a result of the contention, each of the platooning target nodes may transmit a platooning indication frame.

The platooning configuration node may receive the platooning indication frame from the platooning target nodes. In addition, the platooning configuration node may transmit ACK, which is response information to the platooning indication frames, to the platooning target nodes. The platoon configuration node may transmit the polling frame a plurality of times to discover a platooning group. The platooning configuration node may transmit the polling frame after a preset inter-polling interval elapses from the time of transmitting the ACK.

The communication node STA1 that has transmitted the polling frame may receive the platooning indication frames from other communication nodes. The STA1 may generate ACK including a reception status of the platooning indication frame. The STA1 may transmit the ACK to other communication nodes. The communication nodes STA1 to STA5 may perform the platooning polling operation a plurality of times. The STA1 may configure the communication nodes that have transmitted the platooning indication frames in response to the plurality of platooning polling requests as a platooning group. The STA1 may exclude communication nodes (e.g., STA4 and STA6, etc.) that have not transmitted the platooning indication frames in response to the plurality of platooning polling requests from the platooning group. Accordingly, the polling frame may include polling request count information. The number of platooning polling operations of communication nodes may be set differently according to a traveling speed of the vehicles including the communication nodes.

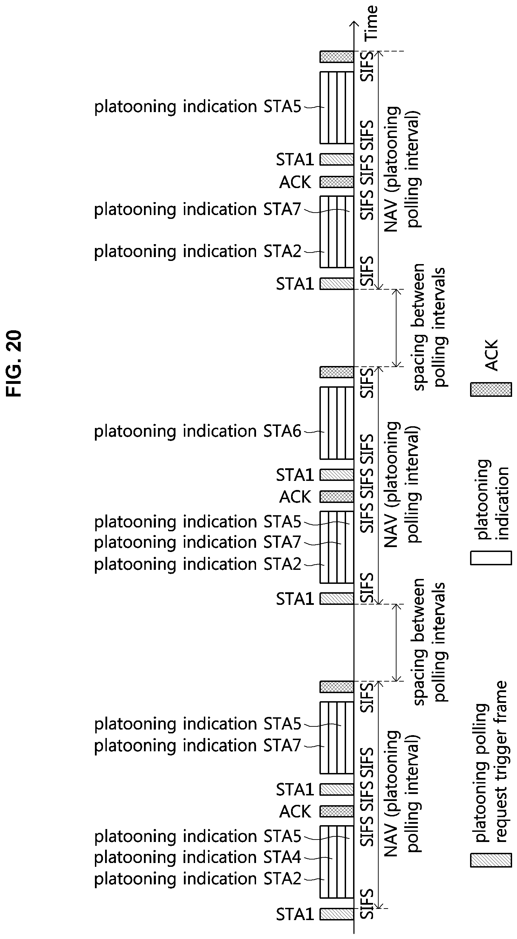

FIG. 20 is a diagram illustrating a first exemplary embodiment of an operation of communication nodes for performing platooning group discovery.

As shown in FIG. 20, a communication node (e.g., platooning configuration node such as the STA1) may discover communication nodes (e.g., platooning target node such as STA2 to STA7) to configure a platooning group. That is, the platooning configuration node may perform polling to discover platooning target nodes moving in the same direction and at the same speed. The platooning configuration node may transmit a polling frame by using a multi-user transmission scheme. Since each communication node may not be in an associated state, an association identifier (AID) may not be used.

Communication nodes that do not belong to a platooning group but desire to perform platooning may perform a wireless LAN contention procedure. As a result of the contention, a communication node may transmit a polling frame. The polling frame may include OFDMA channel information. In performing platooning using the multi-user transmission scheme, the polling frame may be the same frame as the OFDMA trigger frame.

The platooning target nodes may receive the polling frame from the platooning configuration node. The communication nodes receiving the polling frame may perform contention during a platooning polling interval. As a result of the contention, each of the platooning target nodes may transmit a platooning indication frame. The platooning target nodes may transmit the platooning indication frames in the OFDMA scheme. Each of the platooning target nodes may randomly select one channel among OFDMA channels, and transmit the platooning indication frame through the selected channel in the OFDMA random access scheme.

The platooning configuration node may receive the platooning indication frames from the platooning target nodes. In addition, the platooning configuration node may transmit ACK, which is response information to the platooning indication frames, to the platooning target nodes. The platooning configuration node may transmit the polling frame a plurality of times to discover a platooning group. The platooning configuration node may transmit the platooning request frame at least once during the platooning polling interval. In addition, the platooning configuration node may transmit the polling frame after a preset inter-polling interval elapses from the time of transmitting the ACK.

The communication nodes STA1 to STA5 may perform the platooning polling operations a plurality of times in the platooning polling interval. The first transmitted polling frame may include information on the inter-polling interval. Alternatively, each polling frame may include information on each polling interval.

The communication nodes STA1 to STA5 may perform the platooning polling operation a plurality of times. The STA1 may configure the communication nodes that have transmitted the platooning indications to the plurality of platooning polling request as a platooning group. The STA1 may exclude all communication nodes (e.g., STA4 and STA6, etc.) that have not transmitted the platooning indications in response to the plurality of polling requests from the platooning group. The STA1 may generate a polling frame in which identifiers of the communication nodes (e.g., STA4 and STA6, etc.) that have not transmitted the platooning indications are deleted.

In the second platooning polling procedure, only communication nodes responding to the platooning polling request in the first platooning polling procedure may perform polling operations. The STA1 may transmit a polling frame further including information on identifiers of communication nodes subject to polling for the platooning. The identifier of each of the communication nodes may use a MAC address (or a part of the MAC address) of each communication node. The STA1 may perform a polling procedure excluding the communication node that has not transmitted the platooning indication frame for the polling frame in each polling procedure.

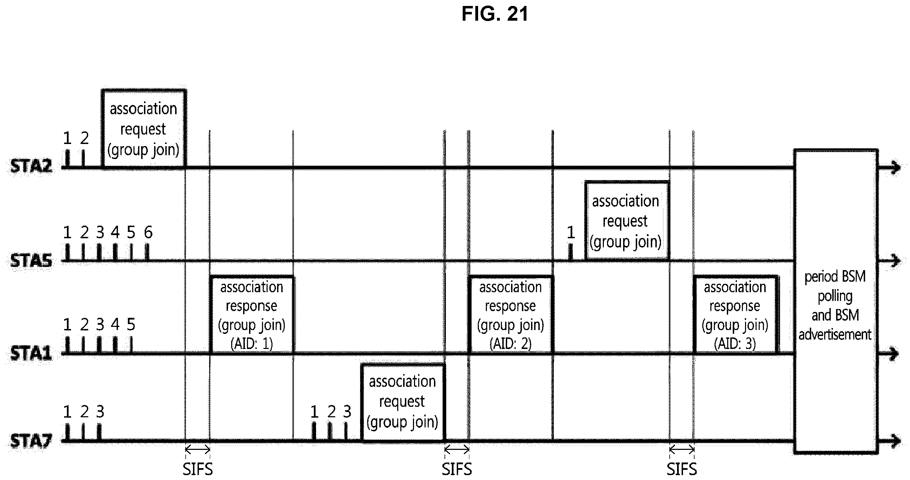

FIG. 21 is a diagram illustrating a first exemplary embodiment of a procedure for joining a platooning group of communication nodes.

As shown in FIG. 21, when the platooning member discovery procedure is completed, the communication nodes (e.g., platooning configuration node such as STA1 and platooning target nodes such as STA2, STA5, and STA7) may form a platooning group. The platooning group may be a BSS.

Referring to FIG. 21, the platooning target nodes may perform contention. As a result of the contention, one communication node (e.g., STA2) among the platooning target nodes may obtain a transmission opportunity(TXOP) and transmit a platooning group join request frame. The platooning group join request frame may include an association request frame of the wireless LAN standard. The STA2 may transmit the platooning group join request frame to the platooning configuration node STA1.

The platooning configuration node may receive the platooning group join request frames from the platooning target node. After a preset IFS (e.g., SIFS) elapses from the time of transmission and reception of the platooning group join request frame, the platooning configuration node may transmit an association response frame that is a response to the received association request frame. The association response frame may further include information on an AID to be allocated to the communication node (e.g., STA2). The platooning target node may receive the association response frame, and may configure its AID according to the indication of the association response frame.

After the platooning join procedure of the STA2 is completed, the platooning target nodes except the STA2 may perform a platooning join procedure through a contention. The platooning target nodes performing the platooning join procedure may receive AIDs from the platooning configuration node and join the platooning group. When all of the platooning target nodes have completed the platooning group join procedure, each communication node of the platooning group may periodically transmit and receive driving information.

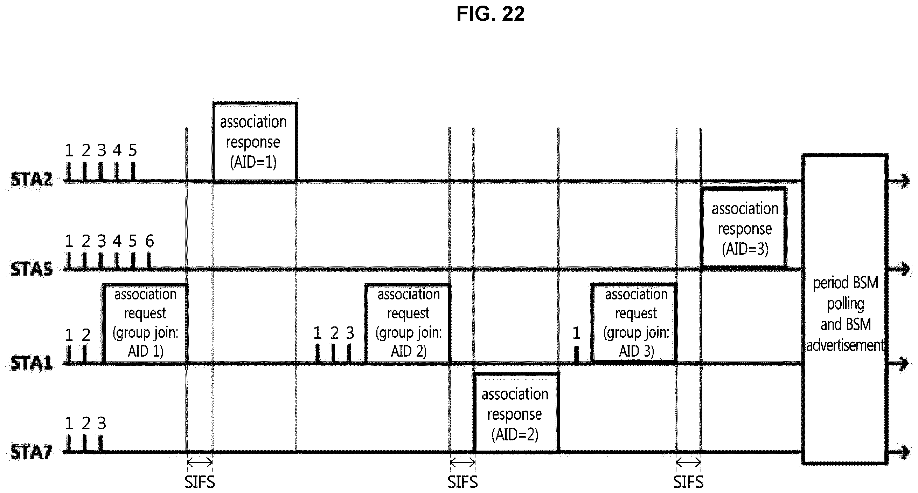

FIG. 22 is a diagram illustrating a second exemplary embodiment of a procedure for joining a platooning group of communication nodes.

As shown in FIG. 22, when the platooning member discovery procedure is completed, communication nodes (e.g., platoon configuration node such as STA1 and platooning target nodes such as STA2, STA5, and STA7) may form a platooning group. The platooning group may be a BSS.

Referring to FIG. 22, the platooning configuration node may transmit a platooning group join request frame to the platooning target nodes. The platooning group join request frame may include an association request frame according to the wireless LAN standard. The platooning group join request frame may further include information on an AID to be allocated to each of the platooning target nodes.

The platooning target nodes may receive the platooning group join request frame from the platooning configuration node. After a preset IFS (e.g., SIFS) elapses from the time of transmission and reception of the platooning group join request frame, the platooning target nodes may perform a contention. As a result of the contention, one communication node among the platooning target nodes may transmit an association response message in response to the receive association request frame. The platooning target node receiving the association response frame as a result of the contention may configure an AID based on AID information included in the platooning group join request frame.

When the platooning group join request frame does not include the AID information, the platooning target node may configure an arbitrary AID among configurable AIDs. The platooning target node may transmit an association response frame including information on the configured AID.

The platooning configuration node may receive the association response frame from the platooning target node (e.g., STA2). The platooning configuration node may configure a platooning group with the platooning target node from which the association response frame is received. The platooning configuration node may configure the AID of the platooning target node according to the indication of the received association response frame.

After the platooning group joining procedure of the STA2 is completed, the platooning target nodes except the STA2 may perform a platooning group join procedure through a contention. The platooning target nodes performing the platooning group join procedure may receive AIDs from the platooning configuration node and join the platooning group. When all of the platooning target nodes have completed the platooning group join procedure, each communication node of the platooning group may periodically transmit and receive driving information.

The STA1 may transmit the association request frame a plurality of times. When the STA1 transmits the association request frame a plurality of times, the STA1 may obtain a transmission opportunity of the association request frame through contention with other communication nodes each time. Alternatively, the STA1 may transmit the association request frame including information on a time for performing an association procedure with all of the platooning target nodes. The STA1 may obtain a transmission opportunity of the association request frame without additional contention when transmitting the remaining association request frames except the first association request frame.

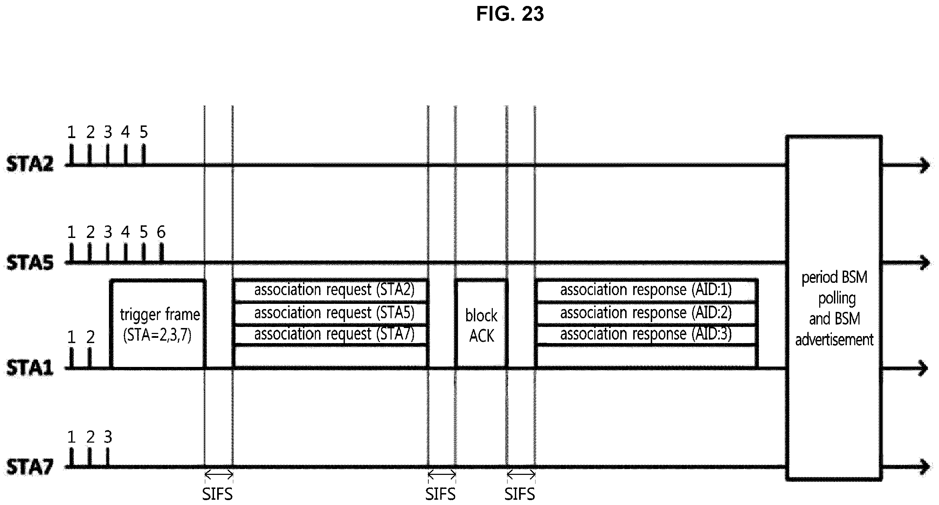

FIG. 23 is a diagram illustrating an exemplary embodiment of an operation of communication nodes for performing platooning group join in an OFDMA communication scheme.

As shown in FIG. 23, when the platooning member discovery procedure is completed, the communication nodes may form a platooning group with discovered communication nodes. The platooning group may be a BSS.

Referring to FIG. 23, the platooning configuration node may transmit a trigger frame. The trigger frame may include information on contention resources for data frame transmission and reception. The trigger frame may further include information on an ID of a BSS (i.e., BSSID) and the platooning target nodes to be designated. The trigger frame may indicate the platooning target nodes by using MAC addresses. The trigger frame may indicate each platooning target node for each contention resource.

The platooning target nodes may receive the trigger frame, and may obtain information on the resources for frame transmission from the trigger frame. For example, the platooning target nodes receiving the trigger frame may obtain information on contention resources (e.g., channel, etc.).

After a preset IFS (e.g., SIFS, etc.) elapses from the time when the transmission and reception of the trigger frame is completed, the platooning target nodes may transmit platooning group join request frames. Each platooning target node may transmit the platooning join request frame through the contention resource in an OFDMA scheme. The platooning group join request frame may include an association request frame according to the wireless LAN standard.

The platooning configuration node may receive the platooning group join request frames from the platooning target nodes through the contention resource. After a preset IFS (e.g., SIFS) elapses from the time of transmitting and receiving the platooning group joining request frame, the platooning configuration node may transmit ACK for the platooning group join request frames. After a preset IFS (e.g., SIFS) elapses from the time of transmitting and receiving the ACK, the platooning configuration node may transmit an association response frame that is a response to the received association request frame. The association response frame may further include information on an AID to be allocated to each of the platooning target nodes (e.g., STA2, STA5, and STA7). The platooning target node may receive the association response frame, and may configure an AID according to the indication of the association response frame.

The communication nodes (e.g., the platooning configuration node and the platooning target nodes) that have configured a platooning group may periodically broadcast platooning information within the platooning group or to communication nodes outside the platooning group.

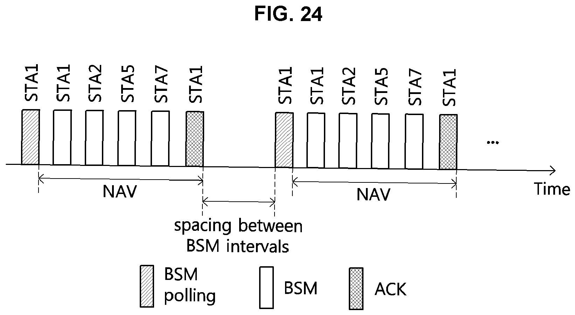

FIG. 24 is a diagram illustrating an exemplary embodiment of a procedure for transmitting and receiving periodic platooning information of a communication node.

As shown in FIG. 24, communication nodes that have formed a platooning group may periodically transmit and receive driving information. A group representative communication node among the communication nodes that have formed the platooning group may transmit a BSM polling frame. The group representative communication node may be a platooning configuration node. The BSM polling frame may include information for setting a NAV and a period for data frame transmission. The period for data frame transmission may include resources for a plurality of communication opportunities, and an interval between the respective resources may be a preset IFS (e.g., SIFS). The BSM polling frame may include an identifier of each of the platooning target nodes. Each of the platooning communication nodes may obtain a communication opportunity according to an order of its AID. The BSM polling frame may further include driving information of the group representative communication node.

The communication nodes constituting the platooning group may receive the BSM polling frame, and each communication node may obtain information on a resource allocated for data frame transmission. Communication nodes that do not constitute the platooning group may set NAVs based on the received BSM polling frame. Each of the communication nodes constituting the platooning group may transmit a data frame through the allocated resource. The data frame may include driving information, braking information, etc. of a vehicle.

The group representative communication node may receive data frames from the communication nodes constituting the platooning group. The group representative communication node may transmit a reception response frame for the received data frames (e.g., a frame including ACKs for the data frames) to the communication nodes constituting the platooning group. The group representative communication node may transmit a BSM polling frame after an inter-BSM interval from the time of transmitting the ACK, so that the communication nodes can periodically transmit and receive platooning information.

When there is no data frame to be transmitted to other communication nodes at a transmission opportunity, a communication node constituting the platooning group may transmit a null frame to maintain the platooning group. When a data frame is not received from a specific communication node for a plurality of transmission periods, the group representative communication node may release connection with the specific communication node. That is, the group representative communication node may delete identifiers of some communication nodes among identifiers of one or more communication nodes to which a reception response frame is to be transmitted, thereby changing information on the communication nodes to which the reception response frame is transmitted.

The group representative communication node may transmit a frame including information on the changed communication nodes (e.g., information from which information of a communication node whose connection is released is deleted). The communication nodes constituting the platooning group may adjust the transmission opportunities in the transmission period by reflecting information on the communication node whose connection is released.

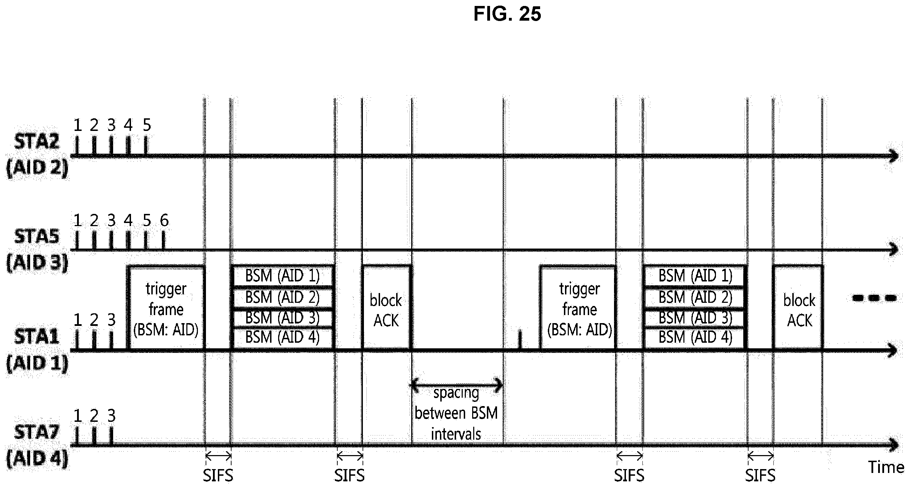

FIG. 25 is a diagram illustrating a first exemplary embodiment of an operation of communication nodes for transmitting and receiving platooning information in an OFDMA communication scheme.

As shown in FIG. 25, communication nodes that have formed a platooning group may periodically transmit and receive driving information. A group representative communication node among the communication nodes that have formed the platooning group may transmit a trigger frame. The trigger frame may include information on contention resources for data frame transmission and reception. The group representative communication node may be a platooning group configuration node. The BSM polling frame may include information for setting a NAV and a period for data frame transmission. The period for data frame transmission may include a plurality of channels. The BSM polling frame may indicate communication nodes of the platooning group to transmit data frames through the respective channels.

The communication nodes constituting the platooning group may receive the trigger frame, and each communication node may obtain information on a resource allocated to transmit a data frame. The communication nodes constituting the platooning group including the group representative communication node may transmit data frames through the allocated resources. The data frame may include driving information, braking information, etc. of a vehicle.

The group representative communication node may receive data frames from the communication nodes constituting the platooning group. The group representative communication node may transmit ACK for the received data frames to the communication nodes constituting the platooning group. The ACK for the data frames may be a block ACK. The group representative communication node may transmit the trigger frame after an inter-BSM interval from the time of transmitting the ACK, so that the communication nodes can periodically transmit and receive platooning information.

When there is no data frame to be transmitted to other communication nodes at a transmission opportunity, a communication node constituting the platooning group may transmit a null frame to maintain the platooning group. When a data frame is not received from a specific communication node for a plurality of transmission periods, the group representative communication node may release connection with the specific communication node. The group representative communication node may transmit a frame including information on the communication node whose connection is released. The communication nodes constituting the platooning group may adjust the transmission opportunities in the transmission period by reflecting information on the communication node whose connection is released.

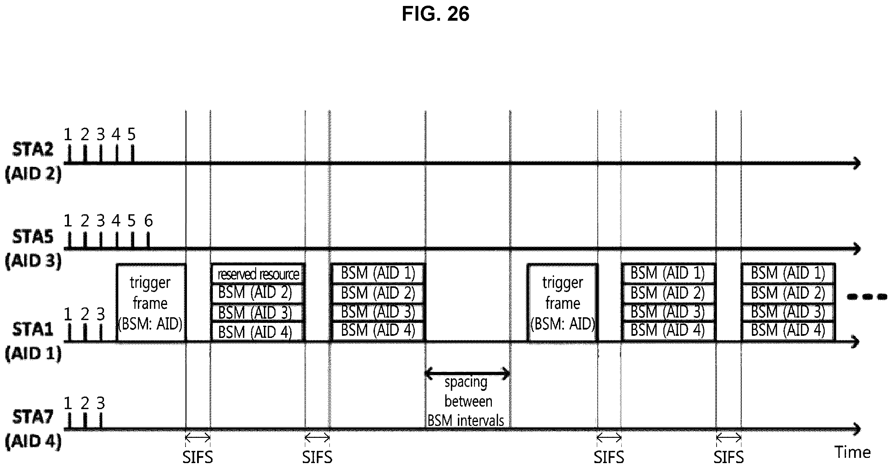

FIG. 26 is a conceptual diagram illustrating a second exemplary embodiment of operations of communication nodes for transmitting and receiving platooning information in an OFDMA communication scheme.

As shown in FIG. 26, communication nodes that have formed a platooning group may periodically transmit and receive driving information. A group representative communication node among the communication nodes that have formed the platooning group may transmit a trigger frame. The trigger frame may include information on a contention resource for transmitting and receiving data frames. The group representative communication node may be a platooning group configuration node. The BSM polling frame may include information for setting a NAV and transmission periods for data frame transmission. The transmission periods for data frame transmission may include a plurality of channels. The BSM polling frame may indicate communication nodes of the platooning group to transmit data frames through the respective channels.

The communication nodes constituting the platooning group may receive the trigger frame, and each communication node may obtain information on a resource allocated to transmit a data frame. The group representative communication node may leave the allocated resource in a reserved state. The communication nodes constituting the platooning group except the group representative communication node may transmit the data frames through the allocated resources. The data frame may include driving information, braking information, etc. of a vehicle.

The group representative communication node may receive the data frames from the communication nodes constituting the platooning group. The group representative communication node may retransmit the data frames received from the communication nodes in the OFDMA scheme. The group representative communication node may further transmit its own data frame through an allocated channel. The group representative communication node may transmit a trigger frame after an inter-BSM interval from the time of retransmitting the data frame, so that the communication nodes can periodically transmit and receive platooning information.

When there is no data frame to be transmitted to other communication nodes at a transmission opportunity, a communication node constituting the platooning group may transmit a null frame to maintain the platooning group. When a data frame is not received from a specific communication node for a plurality of transmission periods, the group representative communication node may release connection with the specific communication node. The group representative communication node may transmit a frame including information on the communication node whose connection is released. The communication nodes constituting the platooning group may adjust the transmission opportunities in the transmission period by reflecting information on the communication node whose connection is released.

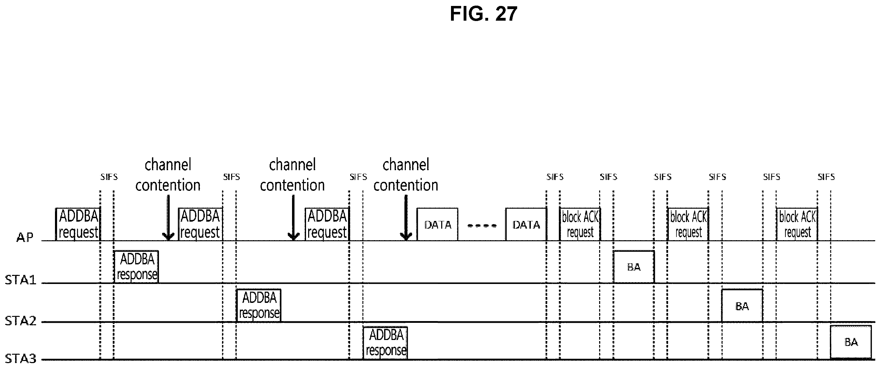

FIG. 27 is a conceptual diagram illustrating an exemplary embodiment of a GCR operation of a communication node in a vehicle communication network.

As shown in FIG. 27, a communication node (e.g., AP) may transmit a data frame to a plurality of communication nodes (e.g., STAs) in a multicast scheme or a groupcast scheme. In addition, the plurality of communication nodes may transmit ACK, which is response information for the data frame, to the communication node (e.g., AP). An operation of transmitting data to a plurality of STAs, obtaining information on transmission states of the data, and retransmitting the data based on the information on the transmission states may be referred to as an operation of "groupcast with retries (GCR)".

Communication nodes (e.g., AP and STA) constituting the communication network may perform an add block acknowledgment (ADDBA) configuration operation to perform the GCR operation. For ADDBA configuration, the AP may transmit an ADDBA request frame to the STAs. The STA may receive the ADDBA request frame from the AP, and may transmit an ADDBA response frame in response to the received frame. The STA may transmit the ADDBA response frame after a preset IFS (e.g., SIFS) elapses from the time of receiving the ADDBA request frame. The communication nodes (e.g., AP and STA) may perform negotiation by exchanging parameters for performing the GCR operation. The procedure of transmitting the block ACK request frame of the AP may be individually performed for each communication node (e.g., STA1 to STA3).

After the ADDBA configuration operation is completed, a data transmission period may be started. At a time of data transmission, communication nodes may access a channel by contention and may transmit data frames. After a preset IFS (e.g., SIFS) elapses from the time of data transmission, the AP may transmit a block ACK request frame to each communication node (e.g., STA1 to STA3). Each of the communication nodes (e.g., STA1 to STA3) may receive the block ACK request frame, and after a preset IFS (e.g., SIFS) elapses from the time of receiving the block ACK request frame, each of the communication may transmit a block ACK including information on a reception status for the data frame. The block ACK request frame transmission procedure of the AP and the block ACK transmission procedure of the STA may be repeatedly performed for the communication nodes constituting the communication network.

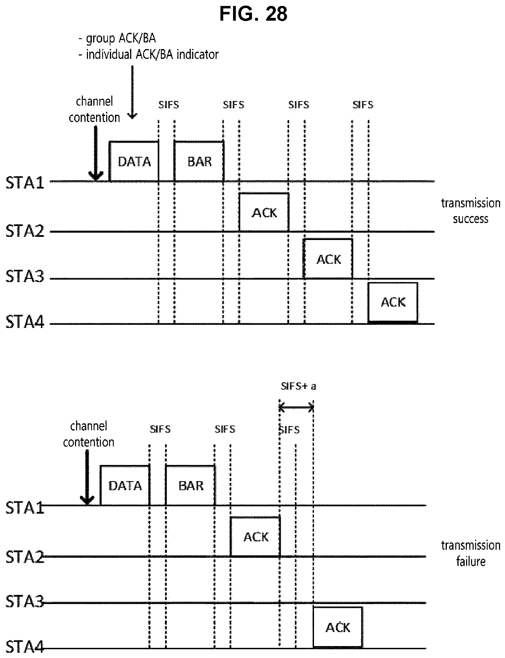

FIG. 28 is a diagram illustrating an exemplary embodiment of an ACK reception operation of a communication node performing OCB communication.

As shown in FIG. 28, each communication node performing OCB communication may perform a GCR operation without performing an association procedure with an AP. Each communication node may be configured in a group by an application layer. Each communication node may preconfigure GCR parameters required for performing a block ACK request procedure and a block ACK procedure through an application layer frame. The GCR operation of the communication node performing OCB communication may be referred to as an OCB GCR. The OCB GCR may be performed in a vehicle communication environment, more specifically, in a platooning environment in which a plurality of terminals operate in a group. Communication nodes performing the OCB GCR may perform contention. One communication node (i.e., data transmitting node, STA1) that has obtained a data frame transmission opportunity as a result of the contention may transmit a data frame to communication nodes (i.e., data receiving nodes, STA2 to STA4) in the platooning environment. Transmission targets of the data frame may be determined by each application. A data receiving node performing OCB communication may receive the data frame from the data transmitting node.

After the data transmission is completed, the data transmitting node may transmit a data frame reception status information request frame for the terminals participating in the transmission. The data frame reception status information request frame may be a block ACK request frame. The block ACK request frame may include information on an ACK transmission order of the data receiving nodes. The data transmitting node may apply a low MCS when transmitting the block ACK request frame.

The data receiving nodes performing OCB communication may receive the data frame reception status information request frame (e.g., block ACK request frame). Each of the data receiving nodes may determine ACK to be transmitted based on a reception status of the data frame. For example, if the data frame includes two or more MPDUs, the communication node may transmit a block ACK. If the data frame includes one MPDU, the communication node may transmit a normal ACK (i.e., simple ACK). The normal ACK may include frame control, duration, and receiver address information (FCS). The respective communication nodes may sequentially transmit ACKs according to the indication of the block ACK request frame. The communication nodes may transmit the ACKs at a preset IFS (e.g., SIFS) interval. The communication node may determine an ACK transmission scheme (e.g., block ACK or normal ACK) based on the indication of the received data frame (e.g., MAC header thereof). Accordingly, even when the data frame includes a plurality of MPDUs, the communication node may transmit a normal ACK for the data frame.

The data transmitting node may receive the ACKs from the data receiving nodes. In addition, the data transmitting node may determine whether there is an abnormality in data frame transmission based on the received ACK information, and may retransmit the data frame. For example, if a normal ACK is not received from the data receiving node even though the data frame includes a plurality of MPDUs, the data transmitting node may retransmit the data frame including the plurality of MPDUs. The data frame (e.g., MAC header thereof) may include period information based on information on the data transmission period, block ACK request frame transmission period, block ACK transmission period, and preset IFS (e.g., SIFS) between the respective periods.

Accordingly, communication nodes that do not perform the GCR among the communication nodes receiving the data frame may set NAVs based on the period information of the data frame. The communication nodes setting NAVs may successfully perform a channel access procedure.

The entire time including the data frame transmission period and the ACK reception period for the data frame may be referred to as a TXOP. During a TXOP configured by the STA1, other communication nodes may transmit ACK frames without a procedure of obtaining a separate transmission opportunity. Other communication nodes that do not participate in the GCR during the TXOP may set NAVs. In addition, the communication node setting the NAV may not perform a separate data frame transmission operation.

If a communication node configured to transmit a normal ACK does not receive the data frame, the communication node may not transmit ACK for the data frame. When the communication node does not transmit ACK, a channel may remain idle during the SIFS period, the ACK transmission period, and the SIFS period thereafter, and thus another communication node may occupy the channel. In order to prevent channel occupation by another communication node, the communication node may transmit NACK when it does not receive the data frame. The NACK may be configured with period value information and symbol time information. The communication node may set a period value of the NACK to a sum of a period value and a symbol time (e.g., 8usec) set when a normal ACK is transmitted.

According to another exemplary embodiment of the present disclosure, when ACK from a previous communication node according to the ACK transmission order is not detected, the communication node may transmit ACK. Specifically, when ACK from a previous communication is not detected for a preset IFS (e.g., SIFS) and a preset time (e.g., 'a'), the communication node may transmit ACK. The preset time may be a symbol time (e.g., 8usec) or a slot time (e.g., 13usec). Also when the communication node is not able to transmit ACK due to a data reception error, a next communication node may transmit ACK after the preset time.

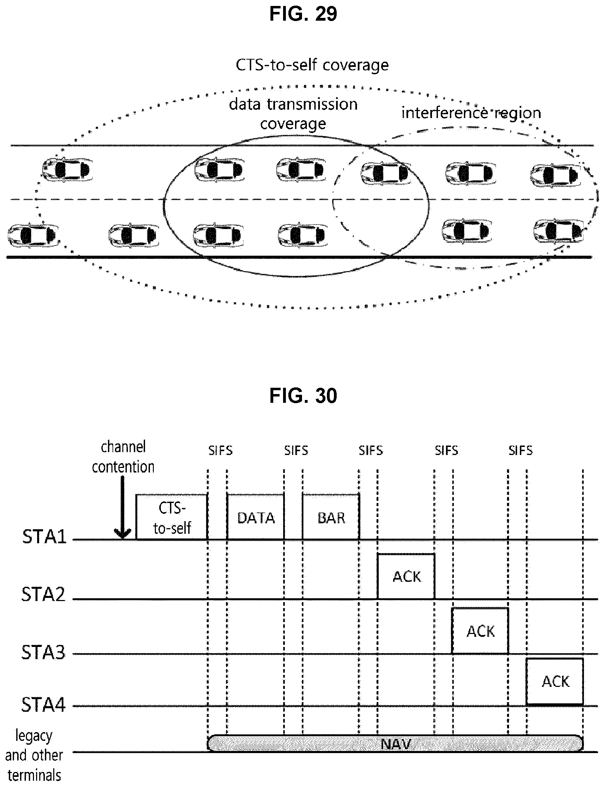

FIG. 29 is a diagram illustrating an exemplary embodiment of a coverage of a clear-to-send (CTS)-to-self frame in a vehicle communication network.

As shown in FIG. 29, a communication node transmitting a frame may determine an MCS, redundant channel coding bits, and a modulation scheme according to information included in the frame. When the MCS of the frame is high, modulation symbols of the frame may include a large number of bits, and the frame may include a small number of redundant channel coding bits, so that a data throughput of the frame may be high. However, a coverage for receiving the frame may be reduced. Accordingly, a communication node transmitting control information may apply a low MCS to a frame including the control information, minimize redundant channel coding bits of the frame, and modulate the control information using a binary phase shift keying (BPSK) scheme. Accordingly, the frame including the control information may be transmitted and received without errors in a wide coverage. A data frame may be transmitted and received by applying a higher MCS than the control information frame.

The communication node constituting the V2X communication network may transmit a data frame including period information. Communication nodes receiving the data frame may set NAVs based on the period information. However, due to the MCS characteristic of the data frame, a coverage of the data frame may be a relatively narrow area, and communication nodes located outside the coverage of the data frame may not be able to set NAVs. Accordingly, the communication node may transmit a frame separate from the data frame to communication nodes located outside the coverage of the data frame. The separate frame transmitted by the communication node may be a CTS-to-self frame. An MCS applied to the CTS-to-self frame may be lower than the MCS applied to the data frame. In addition, a transmission power applied to the CTS-to-self frame may be a maximum transmission power of the communication node transmitting the CTS-to-self frame. Accordingly, a coverage of the CTS-to-self frame may be wider than that of the data frame. The communication node may transmit the CTS-to-self frame to other communication nodes. Among communication nodes receiving the CTS-to-self frame, communication nodes that do not perform OCB communication may set NAVs.

FIG. 30 is a diagram illustrating an exemplary embodiment of an operation of communication nodes setting NAVs using a CTS-to-self frame.

As shown in FIG. 30, a communication node performing a GCR operation may transmit a CTS-to-self frame before transmitting a data frame. The communication node may transmit the CTS-to-self frame to communication nodes by applying a lowest possible MCS. The CTS-to-self frame may use a PPDU format according to the IEEE80.11p protocol. A receiver address (RA) of the CTS-to-self may be set to a multicast address used in the GCR. A period value of the CTS-to-self may include a period required for data frame transmission and reception, a period required for block ACK request frame transmission and reception, and a period required for ACK transmission and reception. Among the communication nodes receiving the CTS-to-self frame, communication nodes that do not perform OCB communication may set NAVs, and may not perform a channel access procedure.

The communication node that has transmitted the CTS-to-self frame may transmit a data frame after a preset IFS (e.g., SIFS) elapses. A communication node performing OCB communication may receive the data frame. After a preset IFS (e.g., SIFS) elapses from the time of data frame transmission and reception, the communication node may transmit a block ACK request frame. The communication node performing OCB communication may perform the transmissions at an SIFS interval. When there is an error in the data frame, the communication node may transmit NACK by configuring a MAC header including a period value, etc.

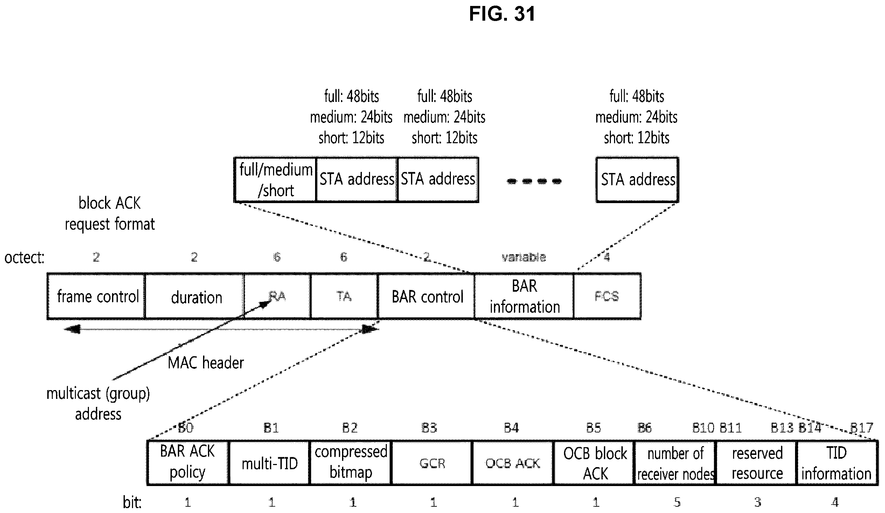

FIG. 31 is a diagram illustrating an exemplary embodiment of a block ACK request frame.

As shown in FIG. 31, a block ACK request frame may include a MAC header and a payload. The MAC header may include a frame control field, a duration field, a RA, and a TA. In addition, the payload may include a block ACK request (BAR) control field, a block ACK request (BAR) information field, and an FCS.

The block ACK request frame may include an indicator for requesting ACK from communication nodes. For example, in the block ACK request frame, a duration value and a PPDU length value of the MAC header are set differently, thereby requesting ACK transmission to the communication node receiving the block ACK request frame.

The block ACK request control field may include information for indicating an ACK transmission order of communication nodes. A partial field of the block ACK request control field may be a field indicating a type of ACK (e.g., block ACK or normal ACK) to communication nodes receiving the block ACK request frame. For example, when a value of an OCB ACK field is set to 1, the communication node may respond with a normal ACK for the data frame, and when the value of the OCB block ACK field is set to 1, the communication node may respond with a block ACK for the data frame. The block ACK request control field may indicate the number of communication nodes that are to receive the block ACK request frame.

The block ACK request information (i.e., BAR information) field may include information on communication nodes to which transmission of a block ACK is requested. The number of the communication nodes to which transmission of a block ACK is requested may be variably set. The first two bits of the block ACK request information field may be a field indicating the length of the STA address. The bits indicating the length of the STA address may indicate one of 'full', 'medium', and 'short'. For example, when the first two bits of the block ACK request information indicate 'short', each STA address field may use 12 bits. Alternatively, when the first two bits of the block ACK request information indicate 'medium', each STA address field may use 24 bits. Alternatively, when the first two bits of the block ACK request information indicate 'full', each address bit may use 48 bits.

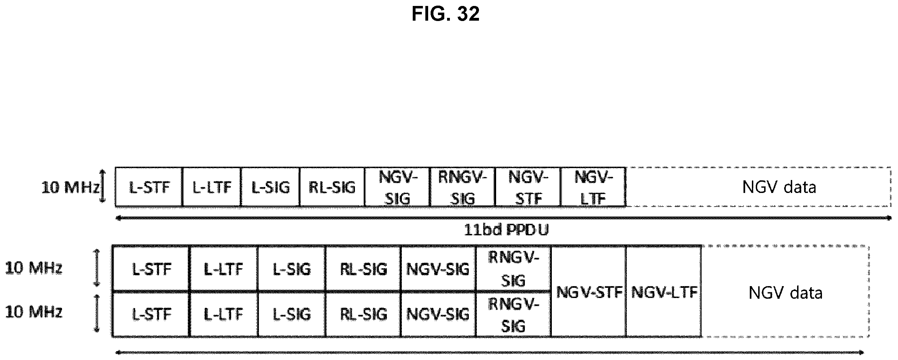

FIG. 32 is a diagram illustrating an exemplary embodiment of a format of fields of a PLCP protocol data unit (PPDU) frame.

As shown in FIG. 32, a PPDU may be transmitted and received in a 10 MHz band, and according to another exemplary embodiment, a PPDU may be transmitted and received in a 20 MHz band. The PPDU may include a legacy preamble and an NGV preamble. The legacy preamble may include a legacy short training field (L-STF), a legacy long training field (L-LTF), and a legacy signal field (L-SIG). The L-STF (and L-LTF) may be a field(s) including information for frame timing acquisition and automatic gain control (AGC), and may be referred to as a synchronization signal or a synchronization channel. The L-SIG may be a field including information such as a transmission rate and a frame length of the frame.

The NGV preamble may include a repeated legacy signal field (RL-SIG), an NGV-SIG, a repeated NGV-SIG (RNGV-SIG), an NGV-STF, and an NGV-LTF. The RL-SIG may be a field including the same data as the L-SIG. The NGV-SIG may be a field including information such as a transmission rate or a frame length of the NGV communication frame, and the RNGV-SIG may be a field including the same data as the NGV-SIG field. The NGV-STF (and NGV-LTF) may be a field(s) including information required for synchronization acquisition of the NGV communication frame.

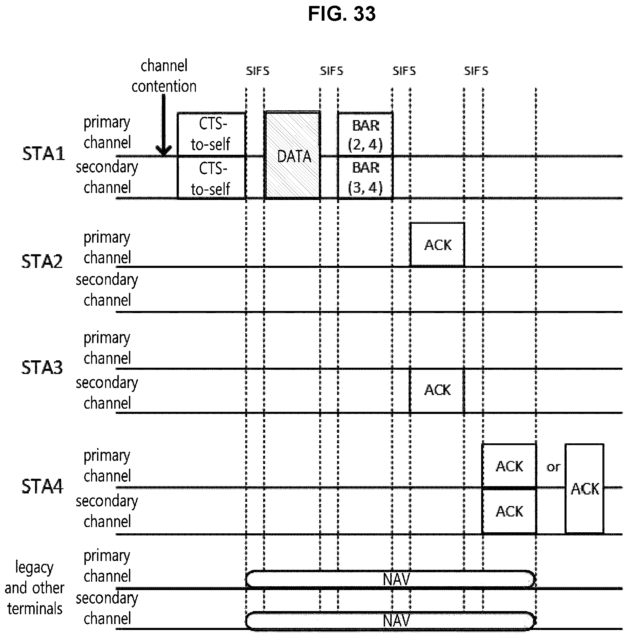

FIG. 33 is a diagram illustrating a first exemplary embodiment of an operation of communication nodes transmitting ACKs through a 20 MHz band.

As shown in FIG. 33, communication nodes performing OCB communication may perform channel contention, and one communication node (e.g., STA1) among the communication nodes may obtain a data transmission opportunity as a result of the contention. The STA1 may transmit CTS-to-self frames to the communication nodes through different channels in units of 10 MHz when transmitting the CTS-to-self frames.

The communication nodes may receive the CTS-to-self frames. Communication nodes that do not perform OCB communication (i.e., legacy & other STAs) may set NAVs based on information of the received CTS-to-self frames. The communication nodes may not transmit additional frames during the NAV.

After a preset IFS (e.g., SIFS) elapses from the time when the CTS-to-self frame is transmitted, the STA1 may transmit data frames to the communication nodes performing OCB communication. In addition, after a preset IFS (e.g., SIFS) elapses from the time when the data frame is transmitted, the STA1 may transmit block ACK request frames to the communication nodes performing OCB communication.

In transmitting the block ACK request frames, the STA 1 may transmit the block ACK request frames through different channels in units of 10 MHz. When it is desired to sequentially receive ACKs from STA2 to STA4, the STA1 may transmit the block ACK request frames through different channels according to an ACK transmission/reception order. For example, the STA1 may transmit the block ACK request frame through a primary channel to odd-numbered communication nodes (e.g., STA2 and STA4) which are to transmit ACK. In addition, the STA1 may transmit the block ACK request frame through a secondary channel to even-numbered communication nodes (e.g., STA3) which are to transmit ACK.

The communication nodes may receive the block ACK request frame. The communication nodes may transmit ACKs sequentially as indicated by the block ACK request frame. The communication nodes may transmit the ACKs through the channel in which the block ACK request frame is received. According to the order, the odd-numbered communication node (e.g., STA2) may transmit the ACK through the primary channel. Then, the even-numbered communication node (e.g., STA3) may transmit the ACK through the secondary channel. When the last communication node to transmit the ACK (e.g., STA4) is an odd-numbered communication node, the communication node may repeatedly transmit the same ACK through the secondary channel. Alternatively, the communication node may transmit the ACK through a 20 MHz channel.

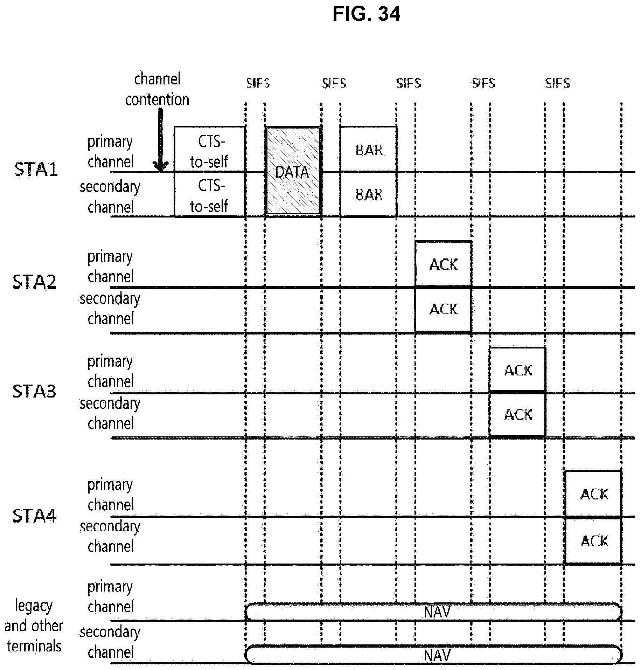

FIG. 34 is a diagram illustrating a secondary exemplary embodiment of an operation of communication nodes transmitting ACKs through a 20 MHz band.

As shown in FIG. 34, communication nodes performing OCB communication may perform channel contention, and one communication node (e.g., STA1) among the communication nodes may obtain a data transmission opportunity as a result of the contention. The STA1 may transmit CTS-to-self frames to the communication nodes. In transmitting the CTS-to-self frames, the STA1 may repeatedly transmit the same CTS-to-self frame through different channels in units of 10 MHz. That is, the STA1 may transmit the CTS-to-self frame through a primary channel and may redundantly transmit the CTS-to-self frame through a secondary channel.

The communication nodes may receive the CTS-to-self frames. The communication nodes may receive the same CTS-to-self frame through different 10 MHz channels, and may decode the frames received through different channels by combining them in a physical layer. Communication nodes that do not perform OCB communication (i.e., legacy & other STAs) may set NAVs based on information of the received CTS-to-self frames. The communication nodes may not transmit additional frames during the NAV.

After a preset IFS (e.g., SIFS) elapses from the time when the CTS-to-self frame is transmitted, the STA1 may transmit data frames to the communication nodes performing OCB communication. In addition, after a preset IFS (e.g., SIFS) elapses from the time when the data frame is transmitted, the STA1 may transmit block ACK request frames to the communication nodes performing OCB communication. In transmitting the block ACK request frames, the STA1 may repeatedly transmit the same block ACK request frame through different channels in units of 10 MHz. That is, the STA1 may transmit the block ACK request frame through a primary channel and may transmit the same block ACK request frame in duplicate through a secondary channel.

The communication nodes may receive the block ACK request frames. The communication nodes may transmit ACKs sequentially as indicated by the block ACK request frame. The communication nodes may repeatedly transmit the same ACK through different channels in units of 10 MHz. That is, the STA1 may transmit the ACK through the primary channel and may transmit the same ACK in duplicate through the secondary channel.

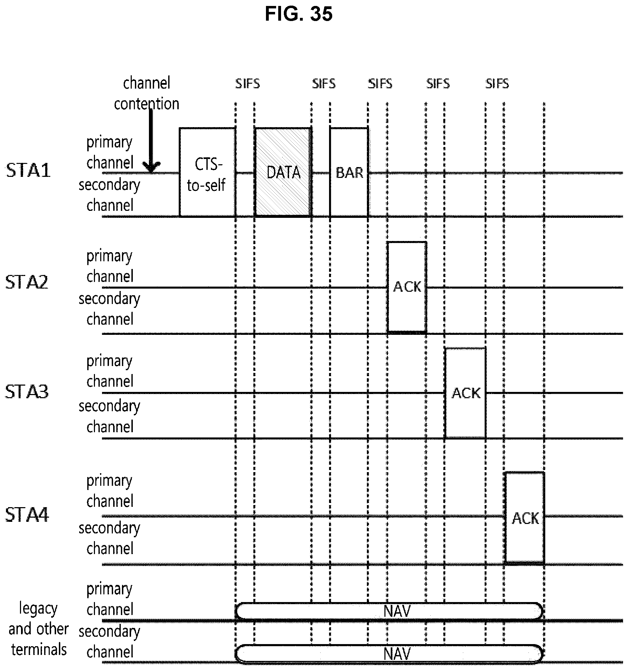

FIG. 35 is a diagram illustrating a third exemplary embodiment of an operation of communication nodes transmitting ACKs through a 20 MHz band.

As shown in FIG. 35, communication nodes performing OCB communication may perform channel contention, and one communication node (e.g., STA1) among the communication nodes may obtain a data transmission opportunity as a result of the contention. The STA1 may transmit CTS-to-self frames to the communication nodes. In transmitting the CTS-to-self frames, the STA1 may transmit the CTS-to-self frames through a 20 MHz channel.

The communication nodes may receive the CTS-to-self frame. The communication nodes may receive the CTS-to-self frame through the 20 MHz channel. Communication nodes that do not perform OCB communication (i.e., legacy & other STAs) may set NAVs based on information of the received CTS-to-self frame. The communication nodes may not transmit additional frames during the NAV.

After a preset IFS (e.g., SIFS) elapses from the time when the CTS-to-self frame is transmitted, the STA1 may transmit data frames to the communication nodes performing OCB communication. In addition, after a preset IFS (e.g., SIFS) elapses from the time when the data frame is transmitted, the STA1 may transmit a block ACK request frame to the communication nodes performing OCB communication. In transmitting the block ACK request frame, the STA1 may transmit the block ACK request frame through a 20 MHz channel.

The communication nodes may receive the block ACK request frame. The communication nodes may transmit ACKs sequentially as indicated by the block ACK request frame. The communication nodes may transmit ACKs through the 20 MHz channel.

The exemplary embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the embodiments of the present disclosure and their advantages have been described in detail, it should be understood that various changes, substitutions and alterations may be made herein without departing from the scope of the present disclosure.

## Claims

1. An operation method of a first communication node in a wireless communication network, the operation method comprising:
transmitting a first frame to a plurality of communication nodes, the first frame including configuration information of a data transmission period including at least one frame transmission period; and
receiving second data frames from one or more communication nodes among the plurality of communication nodes during the data transmission period,
wherein the first frame includes identifiers indicating the plurality of communication nodes and information for setting network allocation vectors (NAVs) for communication nodes excluding the plurality of communication nodes.

2. The operation method according to claim 1, further comprising, before transmitting the first frame, transmitting, to the plurality of communication nodes, a trigger indication frame including information indicating that transmission of the first frame is scheduled.

3. The operation method according to claim 2, wherein an interval between the trigger indication frame and the first frame is a short inter-frame space (SIFS) or a reduced inter-frame space (RIFS).

4. The operation method according to claim 2, wherein the trigger indication frame includes a transmission period of the first frame and identifiers indicating the plurality of communication node, and further includes information for setting NAVs for communication nodes excluding the plurality of communication nodes.

5. The operation method according to claim 2, wherein the first frame further includes information for requesting a reception response to the trigger indication frame, and each of the second data frames includes reception response information of each of the one or more communication nodes for the trigger indication frame.

6. The operation method according to claim 5, wherein the information for requesting the reception response to the trigger indication frame requests the reception response through a difference between a time indicated by a duration field of a media access control (MAC) header of the first frame and a time indicated by a physical protocol data unit (PPDU) length field of the MAC header.

7. The operation method according to claim 2, further comprising, after receiving the second data frames, if the second data frames are not received from at least one of the one or more communication nodes, retransmitting the trigger indication frame in a broadcast manner.

8. The operation method according to claim 1, wherein the first frame includes at least one among information on a number of the at least one frame transmission period, information indicating the at least one frame transmission period, and information on an interval between the at least one frame transmission period.

9. An operation method of a first communication node in a wireless communication network, the operation method comprising:
transmitting a first frame to a plurality of communication nodes;
transmitting a reception response request frame to the plurality of communication nodes, the reception response request frame including information requesting transmission of a reception response frame for the first frame and an identifier of each of one or more communication nodes that are to transmit the reception response frame among the plurality of communication nodes; and
receiving the reception response frames from the one or more communication nodes.

10. The operation method according to claim 9, wherein the reception response request frame includes information on at least one frame transmission period in which the one or more communication nodes transmit the reception response frames, respectively, and the at least one frame transmission period is arranged at a short inter-frame space (SIFS) interval.

11. The operation method according to claim 10, wherein the reception response request frame indicates an order of receiving the reception response frames from the one or more communication nodes, and according to the order indicated by the reception response request frame, the reception response frames are received from the one or more communication nodes.

12. The operation method according to claim 9, wherein the first frame includes identifiers indicating the plurality of communication nodes and information for setting network allocation vectors (NAVs) for communication nodes excluding the plurality of communication nodes.

13. The operation method according to claim 9, further comprising, before transmitting the first frame, transmitting a clear-to-send (CTS)-to-self frame to the plurality of communication nodes,
wherein the CTS-to-self frame includes information on a period in which the first frame is transmitted and a period in which the reception response message is transmitted.

14. The operation method according to claim 13, wherein a transmission power of the CTS-to-self frame is a maximum transmission power of the first communication node.

15. An operation method of a first communication node in a wireless communication network, the operation method comprising:
receiving a first frame from a second communication node;
receiving, from the second communication node, a reception response request frame including information requesting transmission of a reception response frame for the first frame and an identifier of the second communication node; and
transmitting the reception response frame for the first frame to the second communication node,
wherein the first frame further includes an identifier of the first communication node.

16. The operation method according to claim 15, wherein the first frame is a time trigger frame (TTF), and an interval between the TTF and the reception response request frame is a short inter-frame space (SIFS) or a reduced inter-frame space (RIFS).

17. The operation method according to claim 15, wherein the reception response request frame includes information on at least one frame transmission period for transmitting the reception response frames, and an interval between the at least one frame transmission period is a short inter-frame space (SIFS).

18. The operation method according to claim 17, wherein the reception response request frame indicates a transmission order of the reception response frames through information mapping identifiers of one or more communication nodes with the at least one frame transmission period, and in the transmitting of the reception response frame, the reception response frame is transmitted through a transmission period indicated by an identifier of the first communication node.

19. The operation method according to claim 15, further comprising, before receiving the first frame, receiving a clear-to-send (CTS)-to-self frame from the second communication node,
wherein the CTS-to-self frame includes information on a period in which the first frame is transmitted and information on at least one frame transmission period for transmitting the reception response frame.

20. The operation method according to claim 19, wherein a transmission power of the CTS-to-self frame is a maximum transmission power of the second communication node.
